# EUROPEAN PATENT APPLICATION

(11) **EP 2 366 723 A2**
(43) Date of publication of application: **21.09.2011**
(21) Application number: 11157324.2
(22) Date of filing: 08.03.2011
(51) Int. Cl.: C08F 265/02, C08F 265/04

(54) **COMPOSITE PARTICLES, METHOD OF MANUFACTURING COMPOSITE PARTICLES, AQUEOUS INK COMPOSITION, AND IMAGE FORMING METHOD USING AQUEOUS INK COMPOSITION**

(30) Priority: 16.03.2010 JP 2010059944
(71) Applicant: Fujifilm Corporation, Minato-ku Tokyo (JP)
(72) Inventor: KUWABARA, Tomoko, Ashigarakami-gun Kanagawa 258-8577 (JP); YANAGI, Terukazu, Ashigarakami-gun Kanagawa 258-8577 (JP); TAMURA, Akio, Ashigarakami-gun Kanagawa 258-8577 (JP)
(74) Representative: Mayall, John

(57) **Abstract**

A method of manufacturing composite particles is disclosed. The method includes preparing an aqueous dispersion of a polymer (a) by a phase inversion emulsification method, using water and a solution of the polymer (a), the polymer (a) containing at least one anionic structural unit and at least one hydrophobic structural unit; and forming composite particles through seed polymerization using at least one crosslinking monomer (b) in the presence of the aqueous dispersion of the polymer (a). Further, composite particles, an aqueous ink composition and an image forming method using the aqueous ink composition are disclosed.

## Description

### BACKGROUND OF THE INVENTION

### Field of the Invention

The present invention relates to composite particles, a manufacturing method of the composite particles, an aqueous ink composition and an image forming method using the aqueous ink composition.

An inkjet recording method performs recording by respectively ejecting ink droplets from a large number of nozzles to adhere the ink droplets onto a recording medium or the like. The inkjet recording method is characterized in that noise at the time of a recording operation is low, running costs are inexpensive, and a high resolution and high quality image can be recorded.

In the inkjet recording method, there has been a problem in that, due to the ink droplets spotted onto a recording medium, adjacent dots may bleed into each other on the recording medium. As a technique to prevent such bleeding on a recording medium, there is known a two liquid aggregation method in which two liquids including an ink and a treatment liquid, that reacts with the ink to aggregate components of the ink, are used. For example, an ink set for inkjet recording has been disclosed, in which one of the liquid composition (treatment liquid) or the ink in the two liquid aggregation method is acidic and the other is alkali, and with which a pigment aggregation property on a recording medium is controlled, thereby improving optical density, suppressing bleeding, suppressing bleeding between colors, and reducing a drying time (see, for example, Japanese Patent Application Laid-Open (JP-A) No. 2004-10633).

Further, as a means for aggregating components in an ink in the two liquid aggregation method, ink compositions containing a latex have been proposed. For example, an inkjet recording method in which an ink composition that contains a styrene-acrylic latex containing a surfactant is used as the ink in the two liquid aggregation method has been disclosed as a method for obtaining a good image (see, for example, Japanese Patent No. 3550637).

As a latex for inkjet ink, there has been known a crosslinking group-introduced latex which is obtained through emulsion polymerization using, for example, an acidic monomer, a hydrophobic monomer, and a crosslinking monomer in the presence of a surfactant. An inkjet ink using the crosslinking group-introduced latex has been disclosed as an inkjet ink that exhibits good accuracy of spotting position on a printing medium and stable ink droplet discharge in a high spotting frequency (see, for example, JP-ANo. 2006-257418).

Besides the emulsion polymerization method, a seed polymerization method is also known as a synthesis method of latex. In the seed polymerization method, a latex is synthesized in advance through emulsion polymerization, which is used as a seed, and polymerization is performed using a monomer. For example, a method of performing seed polymerization using a latex containing carboxylic acid as the seed and using monomers including a crosslinking monomer has been disclosed (see, for example, Japanese Patent No. 3522807).

### SUMMARY OF THE INVENTION

However, in a case in which the ink set for inkjet recording described in JP-A No. 2004-10633 is used, there is a problem in that it becomes less likely that aggregation occurs as the recording speed is increased.

Further, in the inkjet recording method described in Japanese Patent No. 3550637, since the ink contains a surfactant, aggregation cannot be sufficiently carried out by using an alkali treatment liquid on a recording medium. Moreover, when an inkjet ink using a styrene-acrylic latex including a surfactant is used, clogging may be caused at the nozzle portions by film formation.

Further, in the inkjet ink described in JP-A No. 2006-257418, it is presumed that shear stability is enhanced when the latex is used, but clogging of nozzle portions cannot be sufficiently alleviated. Moreover, since a surfactant is used, there is a problem in that aggregation cannot be sufficiently carried out by using an alkali treatment liquid on a recording medium.

In addition, in the method described in Japanese Patent No. 3522807, since the latex is obtained by using a surfactant at the time of synthesis of the seed and at the time of seed polymerization, there are problems in that a sufficient aggregation property cannot be obtained and clogging of nozzle portions cannot be alleviated.

The present invention provides composite particles and a method of manufacturing the composite particles.
Further, the present invention provides an aqueous ink composition.
Moreover, the present invention provides an image forming method.

According to a first aspect of the present invention, a manufacturing method of composite particles is provided. The method includes preparing an aqueous dispersion of a polymer (a) by a phase inversion emulsification method, using water and a solution of the polymer (a), the polymer (a) containing at least one anionic structural unit and at least one hydrophobic structural unit; and forming composite particles through seed polymerization using at least one crosslinking monomer (b) in the presence of the aqueous dispersion of the polymer (a).
According to a second aspect of the present invention, composite particles obtained by the method of the first aspect, is provided.

According to a third aspect of the present invention, an aqueous ink composition including the composite particles of the second aspect and a colorant, is provided.
According to a fourth aspect of the present invention, an image forming method including applying the aqueous ink composition of the third aspect onto a recording medium, is provided.

### DETAILED DESCRIPTION OF THE INVENTION

### <<Method of Manufacturing Composite Particles (A)>>

The method of manufacturing composite particles (A) of the present invention includes (i) preparing an aqueous dispersion of a polymer (a) in accordance with a phase inversion emulsification method, using water and a solution of the polymer (a) (hereinafter, may also be referred to as "specific polymer") containing an anionic structural unit and a hydrophobic structural unit, and (ii) forming composite particles (A) through seed polymerization using at least one crosslinking monomer (b) in the presence of the aqueous dispersion of the polymer (a). The method of manufacturing composite particles (A) of the present invention may include other processes, as necessary.
The present invention has such a configuration, specifically, the present invention includes a dispersion preparing process of preparing an aqueous dispersion of a polymer (a) by using a polymer (a) solution and water in accordance with a phase inversion emulsification method, and also a composite particle forming process of forming composite particles (A) through seed polymerization using a crosslinking monomer (b) in the presence of the aqueous dispersion of the polymer (a). Accordingly, it is possible that a surfactant is not contained or a surfactant is not substantially contained such that the content of the surfactant is 0.001 % by mass or less of the total mass, and therefore, composite particles which are harder than conventional particles can be formed.
Further, in the aqueous ink composition that is obtained by using the composite particles together with a colorant, ink jetting stability may be excellent when the ink composition is ejected by an inkjet recording method, and bleeding of the obtained print pattern (lowering of aggregation property) may be suppressed. Moreover, the aqueous ink composition of the present invention which contains the composite particles of the invention, the composite particles having a higher hardness than the hardness of conventional particles, may exhibit excellent maintenance property.
In the present invention, the term "maintenance" includes in its scope an operation for maintaining the inkjet head, that ejects the ink composition for inkjet recording, and ejection performance thereof in a desired state or close to the desired state (conservation), and an operation of washing (cleaning) the head for recording for the purpose of maintaining the head for recording in a better state. The term "maintenance liquid" includes in its scope a washing liquid for washing the ink composition.

In the present invention, composite particles having a higher hardness than the hardness of particles that are prepared by using a latex obtained through conventional emulsion polymerization or the like can be formed. The reason is being guessed as follows.
In the present invention, an aqueous dispersion of seed polymer particles, which does not contain a surfactant or in which the content of a surfactant is 0.001 % by mass or less of the total mass, is formed through phase inversion emulsification using a polymer (a) solution and water, and thereafter, seed polymerization is performed. Therefore, it is thought that a lot of crosslinking monomers can be introduced, and by performing crosslinking, hard composite particles of the polymer (a) can be formed.
In connection with the above, when a latex of the polymer (a) is obtained by a method other than the phase inversion emulsification method, for example, a conventional emulsion polymerization method, the latex contains a surfactant. Since the latex contains a surfactant, it is thought that crosslinking monomers cannot be incorporated a lot in the core of the latex, even in the succeeding seed polymerization, and as a result, hard composite particles of the polymer (a) cannot be formed.
Further, in a case in which seed polymerization is performed using a latex containing a surfactant, the aggregation property of the ink composition to be obtained thereafter by using the composite particles of the polymer (a) may be deteriorated.
Moreover, in a case in which soap free polymerization that does not involve a surfactant is performed instead of performing seed polymerization, the particle diameters of the obtained composite particles of the polymer (a) may become large, and the jetting stability of the ink composition to be obtained by using the obtained composite particles of the polymer (a) may be deteriorated.

The present inventors have found that hard composite particles can be obtained by preparing an aqueous dispersion that can introduce a lot of crosslinking monomers through phase inversion emulsification using a polymer (a) solution and water, and then further performing seed polymerization using these dispersed particles as seed, whereby they arrived at the present invention. Further, the present inventors have found that, in the ink composition of the present invention which is prepared by using these composite particles, for example, when an image is formed using a treatment liquid containing an aggregating component that aggregates components in the ink composition, the aggregation properties of the components in the ink composition are high, and bleeding of the printed image can be remarkably suppressed, and further, the ink composition can exhibit excellent ink jetting stability and excellent maintenance property, whereby they arrived at the present invention.

### [Dispersion Preparing Process]

The dispersion preparing process in the present invention is (i) a process for preparing an aqueous dispersion of a polymer (a) by using water and a solution of the polymer (a) (specific polymer) including an anionic structural unit and a hydrophobic structural unit, in accordance with a phase inversion emulsification method.
In the dispersion preparing process in the present invention, phase inversion emulsification is performed by a phase inversion emulsification method using the polymer (a) solution and water, whereby an aqueous dispersion of the polymer (a), which does not contain a surfactant, can be obtained.
By using the specific polymer according to the present invention and by using the phase inversion emulsification method that does not use a surfactant, an aqueous dispersion of polymer particles which does not contain a surfactant or an aqueous dispersion of polymer particles in which the content of a surfactant is 0.001 % by mass or less of the total mass may be obtained. The obtained aqueous dispersion of polymer particles is used for seed polymerization by a seed polymerization method described below, thereby obtaining hard composite particles.

### <Polymer (a)>

The polymer (a) in the present invention includes at least one kind of anionic structural unit and at least one kind of hydrophobic structural unit.
It is preferred that at least one of the anionic structural units contains a carboxyl group, a phosphoric acid group, or a sulfonic acid group as an anionic group, and particularly preferably a carboxyl group, from the viewpoints of improvement in dispersion stability of the aqueous ink composition when used in an aqueous ink composition and improvement in aggregation property when used together with an acidic treatment liquid.

It is preferable that the anionic structural unit in the present invention is derived from an anionic monomer, and it is more preferable that the anionic monomer has an anionic group and an ethylenically unsaturated bond.
The "structural unit (of a polymer) derived from a (specific) monomer" herein means a unit that has a structure which can be typically incorporated into the polymer by employing the (specific) monomer as that to be polymerized for forming the polymer.
Examples of the anionic monomer include an unsaturated carboxylic acid monomer, an unsaturated sulfonic acid monomer, and an unsaturated phosphoric acid monomer.

Specific examples of the unsaturated carboxylic acid monomer include acrylic acid, methacrylic acid, crotonic acid, itaconic acid, maleic acid, fumaric acid, citraconic acid, and 2-methacryloyloxyethylsuccinic acid. Specific examples of the unsaturated sulfonic acid monomer include styrene sulfonic acid, 2-acrylamido-2-methylpropanesulfonic acid, 3-sulfopropyl (meth)acrylate, and bis-(3-sulfopropyl) itaconate. Specific examples of the unsaturated phosphoric acid monomer include vinylphosphonic acid, vinyl phosphate, bis(methacryloyloxyethyl) phosphate, diphenyl-2-acryloyloxyethyl phosphate, diphenyl-2-methacryloyloxyethyl phosphate and dibutyl-2-acryloyloxyethyl phosphate.
From the viewpoint of dispersion stability and jetting stability, an unsaturated carboxylic acid monomer is preferable, and acrylic acid and methacrylic acid are more preferable, among anionic monomers as described above.

From the viewpoint of dispersion stability, the hydrophobic structural unit(s) preferably include at least one kind of structural unit derived from a monomer having an ethylenically unsaturated bond, and more preferably includes at least one kind of structural unit derived from at least one of an acrylic ester monomer or a methacrylic ester monomer.
Specific examples of a monomer for forming the hydrophobic structural unit include styrene, α-methyl styrene, methyl acrylate, ethyl acrylate, n-propyl acrylate, isopropyl acrylate, n-butyl acrylate, isobutyl acrylate, sec-butyl acrylate, tert-butyl acrylate, amyl acrylate, hexyl acrylate, 2-ethylhexyl acrylate, octyl acrylate, tert-octyl acrylate, 2-chloroethyl acrylate, 2-bromoethyl acrylate, 4-chlorobutyl acrylate, cyanoethyl acrylate, 2-acetoxyethyl acrylate, benzyl acrylate, methoxybenzyl acrylate, 2-chlorocyclohexyl acrylate, cyclohexyl acrylate, furfuryl acrylate, tetra-hydrofurfuryl acrylate, phenyl acrylate, 2-phenoxyethyl acrylate, 5-hydroxypentyl acrylate, 2,2-dimethyl-3-hydroxypropyl acrylate, 2-methoxyethyl acrylate, 3-methoxybutyl acrylate, 2-ethoxyethyl acrylate, 2-butoxyethyl acrylate, 2-(2-methoxyethoxy)ethyl acrylate, 2-(2-butoxyethoxy)ethyl acrylate, glycidyl acrylate, 1-bromo-2-methoxyethyl acrylate, 1,1-dichloro-2-ethoxyethyl acrylate, 1,2,2,2-tetra-fluoroethyl acrylate, 1H,1H,2H,2H-perfluorodecyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, hexyl methacrylate, benzyl methacrylate, chlorobenzyl methacrylate, octyl methacrylate, strearyl methacrylate, 2-(3-phenylpropyloxy)ethyl methacrylate, furfuryl methacrylate, tetra-hydrofurfuryl methacrylate, phenyl methacrylate, 2-phenoxyethyl methacrylate, cresyl methacrylate, naphthyl methacrylate, 2-hydroxyethyl methacrylate, 4-hydroxybutyl methacrylate, triethyleneglycol monomethacrylate, dipropylene glycol monomethacrylate, 2-methoxyethyl methacrylate, 3-methoxybutyl methacrylate, 2-ethoxyethyl methacrylate, methoxydiethyleneglycol methacrylate, 2-iso-propoxyethyl methacrylate, 2-butoxyethyl methacrylate, 2-(2-methoxyethoxy)ethyl methacrylate, 2-(2-ethoxyethoxy)ethyl methacrylate, 2-(2-butoxyethoxy)ethyl methacrylate, 2-acetoxyethyl methacrylate, 2-acetoacetoxyethyl methacrylate, allyl methacrylate, glycidyl methacrylate, 1,2,2,2-tetra-fluoroethyl methacrylate, and 1H,1H,2H,2H-perfluorodecyl methacrylate.

Other specific examples of a monomer for forming the hydrophobic structural unit include acrylic esters and methacrylic esters such as acrylic esters or methacrylic esters of cyclohexyl, cyclohexylmethyl, 3-cyclohexenylmethyl, 4-isopropylcyclohexyl, 1-methylcyclohexyl, 2-methylcyclohexyl, 3-methylcyclohexyl, 4-methylcyclohexyl, 1-ethylcyclohexyl, 4-ethylcyclohexyl, 2-tert-butylcyclohexyl, 4-tert-butylcyclohexyl, menthyl, 3,3,5-trimethylcyclohexyl, cycloheptyl, cyclooctyl, nonyl, cyclodecyl, 2-norbornyl, isobornyl, 3-methyl-2-norbornyl, dicyclopentanyl, dicyclopentenyl, dicyclopentenyloxyethyl, adamantan-1-il, adamantan-2-il, 2-methyladamantan-2-il, 2-ethyladamantan-2-il, 3,5-dimethyladamantan-1-il, or 1,1'-bisadamantan-3-il.

The acid value of the polymer (a) in the present invention is preferably from 10 mgKOH/g to 200 mgKOH/g, more preferably from 10 mgKOH/g to 190 mgKOH/g, and most preferably from 10 mgKOH/g to 180 mgKOH/g, from the viewpoints of improvement in jetting stability and aggregation property of the aqueous ink composition. Note that, the acid value used herein is defined as the mass (mg) of KOH (potassium hydroxide) necessary for completely neutralizing 1 g of the polymer (a), and can be measured by the method described in Japanese Industrial Standards (JISK0070 : 1992), the disclosure of which is incorporated by reference herein. The value measured by this method is used in the present invention.

The molecular weight range of the polymer (a) in the present invention is preferably from 3,000 to 200,000, more preferably from 5,000 to 150,000, and even more preferably from 10,000 to 100,000 in terms of weight average molecular weight. When the weight average molecular weight is 3,000 or more, the amount of water-soluble components can be effectively reduced. When the weight average molecular weight is 200,000 or less, the self-emulsification stability may be further enhanced.
It should be noted that, in the present invention, the weight average molecular weight is determined by using the gel permeation chromatography (GPC). Specifically, the weight average molecular weight is measured using columns TSKGEL SUPER HZM-H, TSKGEL SUPER HZ4000, and TSKGEL SUPER HZ200 (all trade names, manufactured by Tosoh Corporation), and is calculated in terms of polystyrene.

The synthesis method of the polymer (a) in the present invention is not particularly limited, and the polymer (a) can be synthesized through copolymerzation using a monomer mixture in accordance with a known method such as a solution polymerization method or a bulk polymerization method. Of these polymerization methods, a solution polymerization method is preferable from the viewpoint of jetting stability of the aqueous ink composition to be prepared. For example, the polymer (a) can be synthesized by a method of allowing a mixture including a monomer mixture and, as necessary, an organic solvent and a radical polymerization initiator, to undergo copolymerization reaction under an inert gas atmosphere.

Hereinafter, exemplary compounds a-1 to a-11 are listed as specific examples of the polymer (a), however the invention is not limited to these specific examples. Note that, the numbers in parentheses represent the mass ratio of the copolymerization components.

•a-1 : methyl methacrylate/ 2-methoxyethyl acrylate/ benzyl methacrylate/ acrylic acid copolymer (44/ 20/ 35/ 1)
• a-2 : methyl methacrylate/ 2-methoxyethyl acrylate/ benzyl methacrylate/ acrylic acid copolymer (23/ 13/ 35/ 29)
• a-3 : methyl methacrylate/ 2-methoxyethyl acrylate/ benzyl methacrylate/ acrylic acid copolymer (20/ 13/ 35/ 32)
• a-4 : methyl methacrylate/ 2-methoxyethyl acrylate/ benzyl methacrylate/ acrylic acid copolymer (44/ 13/ 35/ 8)
• a-5 : methyl methacrylate/ isobornyl methacrylate/ methacrylic acid polymer (55/ 37/ 8)
• a-6 : styrene/ butyl methacrylate/ methacrylic acid/ dimethylaminoethyl methacrylate copolymer (55/ 24/ 15/ 6)
• a-7 : styrene/ t-butyl methacrylate/ acrylic acid copolymer (53/ 27/ 20)
• a-8 : benzyl methacrylate/ butyl methacrylate/ methacrylic acid copolymer (55/ 30/ 15)
• a-9 : benzyl methacrylate/ cyclohexyl methacrylate/ methacrylic acid/ dimethylaminoethyl acrylate copolymer (70/ 15/ 10/ 5)
• a-10 : benzyl methacrylate/ dodecyl methacrylate/ N-vinylpyrrolidone/ acrylic acid copolymer (50/ 25/ 5/ 20)
• a-11 : benzyl methacrylate/ methyl methacrylate/ hydroxyethyl methacrylate/ acrylic acid copolymer (55/ 15/ 10/ 20)

### <Polymer (a) Solution>

The polymer (a) solution in the invention contains a polymer (a) and at least one solvent capable of dissolving the polymer (a). The polymer (a) solution can be prepared by dissolving the polymer (a) in the solvent capable of dissolving the polymer (a). The dissolution method is not particularly restricted, and common dissolution methods may be applied.

The solvent is not particularly restricted as long as the solvent can dissolve the polymer (a). For example, an organic solvent in which the solubility (25°C) of the polymer (a) is 10 % by mass or higher (hereinafter referred to as "organic good solvent" in some cases) may be used.

In the invention, examples of organic good solvents include ketone solvents such as methyl ethyl ketone and acetone, ether solvents such as 1,3-dioxane, 1,4-dioxane, 1,3-oxolane and tetrahydrofuran, ester solvents such as ethyl acetate, and amide solvents such as dimethyl acetamide, dimethyl formamide and N-methyl pyrrolidone. In the invention, the solvent is preferably at least one selected from a ketone solvent, an ether solvent or an ester solvent, more preferably at least one selected from a ketone solvent, an ether solvent or an ester solvent, each of which has a boiling point of 100°C or lower, and still more preferably at least one selected from methyl ethyl ketone, acetone, 1,3-dioxane, 1,4-dioxane, tetrahydrofuran or ethyl acetate.
In addition, one organic good solvent may be used singly, or two or more organic good solvents may be used in combination.

Further, as the solvent capable of dissolving the polymer (a) in the invention, at least one organic good solvent may be used together with at least one solvent in which the solubility of the polymer (a) is low (hereinafter referred to as "organic poor solvent" in some cases). Here, the organic poor solvent, in which the solubility of the polymer (a) is low, means an organic solvent in which the solubility (25°C) of the polymer (a) is lower than 10 % by mass.

Examples of organic poor solvents in the invention include alcohol solvents such as ethanol, isopropyl alcohol, n-butanol, s-butanol, t-butanol and 2-ethylhexanol. Among them, an alcohol solvent having a boiling point of 100°C or lower is preferable, and at least one solvent selected from ethanol, isopropyl alcohol or t-butanol is more preferable.
One organic poor solvent may be used singly, or two or more organic poor solvents may be used in combination.

When one or more organic poor solvents are used together with one or more organic good solvents, the content of organic poor solvents is preferably from 30 % by mass to 70 % by mass, and more preferably from 30 % by mass to 60 % by mass, with respect to the entire mixed solvent to be used for dissolving the polymer (a), from the viewpoint of the dispersion stability of the polymer aqueous dispersion.

### <Aqueous Dispersion of Polymer (a)>

The aqueous dispersion of the polymer (a) in the present invention is obtained through phase inversion emulsification using at least a polymer (a) solution and water.

The phase inversion emulsification in the present invention may be performed by, for example, mixing and stirring, in the absence of a surfactant, using water and a polymer (a) solution obtained by dissolving the polymer (a) in an organic solvent, thereby allowing to undergo phase inversion.
The phase inversion emulsification preferably includes adding a neutralizer capable of neutralizing the anionic groups contained in the polymer (a), and mixing and stirring.
In the present invention, the aqueous dispersion prepared by such an operation undergoes self-dispersion in the absence of a surfactant, due to the anionic functional groups of the polymer (a) itself or salts thereof; and it can be visually confirmed that the dispersed state stably exists at least one week at 25°C.
Further, the term "dispersed state" used herein includes in its scope both states of an emulsified state (emulsion) in which a water-insoluble polymer in the liquid state is dispersed in an aqueous medium and a dispersed state (suspension) in which a water-insoluble polymer in the solid state is dispersed in an aqueous medium.
The aqueous medium above refers to water, or a medium including at least water and the above-described organic solvent.

Further, the water-insoluble polymer refers to a polymer showing a solubility of 10 g or less when the polymer is dried at 105°C for 2 hours and then dissolved in 100 g of water at 25°C. The solubility is preferably 10 g or less, more preferably 5 g or less, and still more preferably 1 g or less. The solubility mentioned above is a value measured when the polymer has been neutralized with sodium hydroxide or acetic acid to a degree of 100% in accordance with the kind of dissociative groups of the water-insoluble polymer.

The dispersion preparing process in the invention includes preparing an aqueous dispersion by performing dispersing the polymer (a) by phase inversion emulsification by mixing and stirring the polymer (a) solution while adding at least water to the polymer (a) solution (hereinafter, may be referred to as "dispersing process").
By adding water to the solution of the polymer (a) dissolved in a solvent as described above, a polymer aqueous dispersion having greater dispersion stability can be obtained without requiring a strong shear force.

Mixing and stirring in the invention is not particularly restricted, and commonly-used mixing and stirring machines and, if needed, dispersing machines such as a ultrasonic dispersing machine and a high-pressure homogenizer, may be used.
As described above, at least water is added into the polymer (a) solution in the invention. In addition to the water, at least one of a neutralizer or an organic solvent (preferably, organic poor solvent) may be further added.

It is preferable that the manufacturing method of the polymer aqueous dispersion in the invention may preferably include, in the dispersion preparing process, a solvent removing process after the dispersing process, from the viewpoint of dispersion stability. The solvent removing process is not particularly restricted as long as it is capable of removing at least a part of the solvent, and commonly-employed methods, such as distillation or vacuum distillation, may be used.
When including the solvent removing process in the invention, the resultant polymer aqueous dispersion may have greater dispersion stability.

In the solvent removing process in the invention, at least a part of solvent is removed, and a part of water may be removed together with the solvent.
In the solvent removing process in the invention, the solvent is removed so as to adjust the content ratio of the solvent in the aqueous dispersion of the polymer (a) to be preferably from 0.05 % by mass to 10 % by mass, and more preferably from 0.08 % by mass to 8 % by mass, relative to the mass of the solid of the polymer (a).

### <Neutralizer>

In the present invention, the polymer (a) solution may further include at least one neutralizer.
The neutralizer is used for neutralizing a part or all of the anionic dissociative groups contained in the polymer (a), and by using the polymer (a), a stable dispersed state can be formed in the aqueous medium.

Examples of the neutralizer, which may be used, include basic compounds such as an organic amine compound, ammonia, and an alkali metal hydroxide. Examples of the organic amine compound include monomethylamine, dimethylamine, trimethylamine, monoethylamine, diethylamine, triethylamine, monopropylamine, dipropylamine, monoethanolamine, diethanolamine, triethanolamine, N,N-dimethylethanolamine, N,N-diethylethanolamine, 2-dimethylamino-2-methyl-1-propanol, 2-amino-2-methyl-1-propanol, N-methyldiethanolamine, N-ethyldiethanolamine, monoisopropanolamine, diisopropanolamine, and triisopropanolamine. Examples of the alkali metal hydroxide include lithium hydroxide, sodium hydroxide, and potassium hydroxide. Among them, from the viewpoint of dispersion stabilization of the polymer (a) in water, at least one selected from the group consisting of sodium hydroxide, potassium hydroxide, triethylamine, and triethanolamine is preferable.

The neutralizer is preferably used in an amount of from 5 mol% to 120 mol% with respect to 100 mol% of the anionic dissociative groups, more preferably used in an amount of from 10 mol% to 110 mol%, and even more preferably used in an amount of from 15 mol% to 100 mol%. When the amount is 5 mol% or more, the effect of stabilizing the dispersion of particles in water may be remarkably exerted. When the amount is 120 mol% or less, the amount of water-soluble components in the dispersed state may be remarkably reduced, whereby the increase in the viscosity of the dispersion liquid may be suppressed.

The aqueous dispersion of the polymer (a) in the invention is manufactured by a process including adding at least one water-soluble electrolyte selected from an acidic compound or a salt thereof to at least one of the polymer (a) solution or the dispersion of the polymer (a). The polymer aqueous dispersion manufactured by such a process is especially excellent in stability, and the stability of the polymerization site in water provided by the polymer (a) can be enhanced. The dispersion stability of the composite particles that are formed by polymerizing monomer(s) in this highly stable polymerization site can be improved.
The water-soluble electrolyte is not particularly restricted as long as the water-soluble electrolyte is a compound selected from an acidic compound or a salt thereof, and as long as the water-soluble electrolyte is a compound having a functional group capable of dissociating when dissolved in water. The water-soluble electrolyte may be either an organic compound or an inorganic compound. Here, the term "water-solubile" means that the compound is soluble in an amount of 5 g or more in 100 g of water at 25°C.
Further, the water-soluble electrolyte is a compound which does not substantially function as a neutralization base, unlike the compound (for example, basic compound such as an alkali metal hydroxide, ammonia or an organic amine compound) used as a neutralization base for neutralizing anionic dissociative groups included in the polymer (a).

Examples of the water-soluble electrolyte in the invention include acidic compounds such as a carboxylic acid derivative, a sulfonic acid derivative, a phosphoric acid derivative, and an inorganic acid, and a compound in which an acidic functional group of any of the above acidic compounds forms a salt. The molecular weight of the acidic compound is not particularly restricted, but from the viewpoint of dispersion stability, the molecular weight of the acidic compound is preferably 1,000 or less, more preferably 500 or less, and still more preferably 300 or less.
Examples of a cation which forms a salt with the acidic compound include an alkali metal ion such as a sodium ion or a potassium ion, an ammonium ion (NH₄⁺), and an amino alcohol ion such as a monoethanol ammonium ion (HOCH₂CH₂NH₃⁺). The cation which forms a salt may be used singly, or two or more kinds of the cations may be used in combination.
Further, the water-soluble electrolyte may be a mixture of an acidic compound and a salt. That is, an acidic functional group of the acidic compound may partially form a salt.

Specific examples of the water-soluble electrolyte include: an acidic compound containing a carboxyl group such as acrylic acid, methacrylic acid, maleic acid, malic acid, tartaric acid, fumaric acid or lactic acid, or a salt thereof; an acidic compound containing a sulfonyl group such as methane sulfonic acid or p-toluene sulfonic acid, or a salt thereof; and a salt of an inorganic acid such as NaCl, KCl, Na₂SO₄, CaCl₂ or AlCl₃.
Among these, from the viewpoint of dispersion stability, the water-soluble electrolyte is preferably at least one selected from an acidic compound containing a carboxyl group, a salt thereof, or a salt of an inorganic acid, more preferably at least one selected from an acidic compound containing a carboxyl group having a molecular weight of 500 or less, a salt thereof, or a salt of an inorganic acid, and still more preferably at least one selected from maleic acid, sodium salt of maleic acid, malic acid, sodium salt of malic acid, tartaric acid, sodium salt of tartaric acid, NaCl, or Na₂SO₄.
The water-soluble electrolyte may be used singly, or two or more thereof may be used in combination.

In the invention, adding the water-soluble electrolyte may be performed at any stage in the manufacturing process of the polymer aqueous dispersion. For example, the water-soluble electrolyte may be added during the process of preparing a polymer (a) solution containing a polymer (a) and a solvent which dissolves the polymer (a), or may be added during the dispersing process in the dispersion preparing process, in which an aqueous dispersion of the polymer (a) is obtained by adding water to the polymer (a) solution, or may be added after the completion of the dispersing process.
In the invention, from the viewpoint of the production efficiency, it is preferable that the water-soluble electrolyte is added to the polymer (a) solution.

The addition amount of the water-soluble electrolyte is such that the content of the water-soluble electrolyte is preferably from 0.01 % by mass to 10 % by mass, and more preferably from 0.02 % by mass to 5 % by mass, with respect to the polymer (a), from the viewpoint of the dispersion stability of the polymer aqueous dispersion.
When the content of the water-soluble electrolyte is 10 % by mass or less, the aggregation, fusion or precipitation of the polymer aqueous dispersion can be suppressed. When the content of the water-soluble electrolyte is 0.01 % by mass or more, the thickness of the electrochemical double layer can be controlled, thereby forming fine particles having a particle diameter capable of dispersing the particles stably in an aqueous medium. That is, when the content is from 0.01 % by mass to 10 % by mass, a polymer aqueous dispersion having high stability, which was difficult to attain with conventional techniques, can be obtained.

In the invention, when a carboxylic acid derivative or a salt thereof is used as a water-soluble electrolyte, the content of the water-soluble electrolyte is preferably from 0.03 % by mass to 8 % by mass, and more preferably from 0.05 % by mass to 5 % by mass. Further, when an inorganic acid or a salt thereof is used as a water-soluble electrolyte, the content of the water-soluble electrolyte is preferably from 0.02 % by mass to 7 % by mass, and more preferably from 0.04 % by mass to 4 % by mass.

The average particle diameter of the polymer (a) particles in the polymer aqueous dispersion obtained by the above manufacturing method is preferably in the range of from 0.1 nm to 80 nm, more preferably from 0.2 nm to 60 nm, and still more preferably from 0.3 nm to 40 nm. When the average particle diameter is 0.1 nm or more, an increase in viscosity of the aqueous dispersion can be suppressed, and production suitability can be improved. When the average particle diameter is 80 nm or less, storage stability of the aqueous dispersion can be improved. On the other hand, when the average particle diameter is less than 0.1 nm, the interaction among particles may be greatly increased and the viscosity of the polymer aqueous dispersion may increase, resulting in reduction of the production efficiency, in some cases. When the average particle diameter exceeds 80 nm, fusion between the particles is increased and the number of micron-size coarse particles increases, resulting in difficulty in maintaining a stable dispersed state.

The particle size distribution of the polymer (a) in the polymer aqueous dispersion is not particularly restricted, and may be either a wide particle size distribution or a monodispersed particle size distribution. Moreover, two or more kinds of the polymer (a) may be mixed and contained.
The average particle diameter and particle size distribution of the polymer (a) may be measured, for example, by a dynamic light scattering method.
In the invention, one kind of the polymer (a) may be used singly or two more kinds which are different in, for example, structure, copolymerization ratio and/or molecular weight thereof may be used in combination.

[Composite Particle Forming Process]
The composite particle forming process in the present invention is a process of forming composite particles (A) through seed polymerization using at least one kind of crosslinking monomer (b) in the presence of the aqueous dispersion of the polymer (a).
By performing seed polymerization using at least one kind of crosslinking monomer (b) in the presence of the aqueous dispersion of the polymer (a), hard composite particles which do not substantially contain a surfactant, can be formed. Further, in a case in which an ink composition is prepared using the composite particles, since the ink composition does not contain a surfactant, the ink aggregation property can be remarkably enhanced when an image is formed using the ink composition together with a treatment liquid that contains an aggregating component capable of aggregating components in the ink composition. Further, since the hardness of the composite particles is high, the maintenance property of the ink composition containing the composite particles may be remarkably enhanced when the ink composition is adhered to the ejection head or the like.
The aqueous dispersion of the polymer (a) used in this process is the above-described aqueous dispersion of the polymer (a) which is obtained in the dispersion preparing process, and details thereof are as described above.

### <Seed Polymerization>

The composite particles (A) of the present invention can be obtained through seed polymerization using the aqueous dispersion of the polymer (a) as seed and using at least one kind of crosslinking monomer (b). Herein, it is preferable that the aqueous dispersion of the polymer (a) to become seed functions as an emulsifying agent component. The aqueous dispersion of the polymer (a) that functions as an emulsifying agent component forms a micelle in which the components to be emulsified which include the crosslinking monomer (b) exist in the form of a liquid droplet, and polymerization can be initiated in the state in which a radical polymerization initiator is introduced into the micelle. That is, it is preferable that the aqueous dispersion of the polymer (a) can give a site for polymerization in water to the crosslinking monomer (b) that is insoluble or slightly soluble in water.

The seed polymerization method in the present invention is not particularly limited, and a known method may be used.
Specifically, distilled water and a crosslinking monomer (for example, divinylbenzene) are added to the aqueous dispersion obtained in the above dispersion preparing process, and the mixture is heated and stirred under nitrogen gas flow. Then, an aqueous solution including a polymerization initiator (for example, 2,2'-azobis(2-amidinopropane) dihydrochloride) and distilled water is added thereto. Then, after stirring, an aqueous solution including a polymerization initiator (for example, 2,2'-azobis(2-amidinopropane) dihydrochloride) and distilled water is further added thereto, the temperature of the resulting mixture is elevated, and the mixture is further stirred, to obtain composite particles.

In the above seed polymerization, the temperature under nitrogen gas flow is preferably from 40°C to 100°C, and more preferably from 50°C to 100°C, from the viewpoint of obtaining hard composite particles.
Further, the time for stirring, after the addition of the polymerization initiator in the form of an aqueous solution, is preferably from 3 hours to 10 hours at a temperature of from 40°C to 100°C, and is more preferably from 4 hours to 8 hours at a temperature of from 50°C to 100°C, from the viewpoint of obtaining hard composite particles and from the viewpoint of reducing the amount of residual monomer and sufficiently introducing the crosslinking groups.
It is preferable that the addition of the polymerization initiator is performed plural times. The temperature and time for stirring at the last addition is preferably from 40°C to 100°C and from 1 hour to 6 hours, and more preferably from 50°C to 100°C and from 2 hours to 6 hours.
Among the above, from the viewpoint of obtaining hard composite particles, it is preferable that the seed polymerization is carried out under the conditions in which the polymerization initiator is added in two separate additions, and after the first addition of the polymerization initiator, stirring is conducted for 2 hours to 4 hours at a temperature of from 50°C to 100°C and thereafter, the polymerization initiator is added for the second time, and stirring is conducted for 2 hours to 6 hours at a temperature of from 50°C to 100°C.

In the seed polymerization according to the invention, at least one kind of crosslinking monomer (b) is incorporated, and only the crosslinking monomer (b) may be used, or the crosslinking monomer (b) and a non-crosslinking monomer may be mixed and used. One kind of the crosslinking monomer (b) may be used alone, or two or more kinds of the crosslinking monomers (b) may be mixed and used. Further, one kind of the non-crosslinking monomer may be used alone, or two or more kinds of the non-crosslinking monomers may be mixed and used.

The polymer to be formed by seed polymerization may be either a vinyl polymer or a condensation type polymer (for example, an epoxy resin, polyester, polyurethane, polyamide, cellulose, polyether, polyurea, polyimide, polycarbonate, or the like). Above all, from the viewpoint of dispersion stability of the composite particles (A), it is preferable that at least one kind of the polymers is a vinyl polymer formed through polymerization using a vinyl monomer, and it is more preferable that two or more kinds of the polymers are vinyl polymers.

### <Crosslinking Monomer (b)>

The crosslinking monomer (b) in the present invention is not particularly limited. However, from the viewpoint of the dispersion stability of the composite particles (A), it is preferable that the crosslinking monomer (b) is a vinyl monomer. Among the vinyl monomers, at least one selected from the group consisting of an ether monomer (for example, diallyl ether), an aromatic monomer (for example, divinylbenzene), an acrylamide monomer (for example, N,N'-ethylenebisacrylamide), a methacrylamide monomer (for example, ethidium bromide-N,N'-bismethacrylamide), an acryl monomer (for example, ethylene glycol diacrylate, or the like), and a methacryl monomer (for example, ethylene glycol dimethacrylate, or the like) is more preferable, and at least one selected from the group consisting of an aromatic monomer (for example, divinylbenzene), an acryl monomer (for example, ethylene glycol diacrylate, or the like), and a methacryl monomer (for example, ethylene glycol dimethacrylate, or the like) is even more preferable.

More specifically, examples of the crosslinking monomer (b) include the following compounds.
Namely, examples of the crosslinking monomer (b) include a monomer including a polymerizable bifunctional group or a polymerizable polyfunctional group, and specific examples of the crosslinking monomer (b) include ethylene glycol dimethacrylate, pentaerythritol tetramethacrylate, pentaerythritol trimethacrylate, neopentyl glycol dimethacrylate, 1,3-butanediol dimethacrylate, 1,4-butanediol dimethacrylate, 1,6-hexanediol dimethacrylate, 3-(acryloyloxy)-2-hydroxypropyl methacrylate, ethylene glycol dimethacrylamide, mono-2-(methacryloyloxy)ethyl maleate, divinylbenzene, propylene glycol dimethacrylate, di(ethylene glycol) dimethacrylate, tri(ethylene glycol) dimethacrylate, tetra(ethylene glycol) dimethacrylate, glycerol dimethacrylate, poly(ethylene glycol) dimethacrylate having a molecular weight of from 250 to 2,000, diurethane dimethacrylate, bisphenol A dimethacrylate, bisphenol A ethoxylate dimethacrylate,
1,3-bis(3-methacryloyloxypropyl)-1,1,3,3-tetramethyldisiloxane, trimethylolpropane trimethacrylate, di(trimethylolpropane) tetramethacrylate,
tricyclo[5.2.1.0(2,6)]decanedimethanol dimethacrylate, diallyl ether, di(ethylene glycol) divinyl ether, tri(ethylene glycol) divinyl ether, tetra(ethylene glycol) divinyl ether, poly(ethylene glycol) divinyl ether, trimethylolpropane diallyl ether, diallylbenzene, trimethylolpropane benzoate diacrylate, trimethylolpropane propoxylate triacrylate, pentaerythritol diacrylate monostearate, pentaerythritol propoxylate triacrylate, pentaerythritol triallyl ether, di(propylene glycol) allyl ether methacrylate, 1,4-bis(acryloyl)piperazine, N,N'-ethylenebisacrylamide, N,N'-methylenebisacrylamide, N,N'-(1,2-dihydroxyethylene)bisacrylamide, and ethidium bromide-N,N'-bismethacrylamide. It should be noted that, in the compounds described above, the methacrylate groups can be changed to the corresponding acrylate groups.

Among them, preferable examples include ethylene glycol dimethacrylate, pentaerythritol tetramethacrylate, pentaerythritol trimethacrylate, neopentyl glycol dimethacrylate, 1,3-butanediol dimethacrylate, 1,4-butanediol dimethacrylate, 1,6-hexanediol dimethacrylate, divinylbenzene, propylene glycol dimethacrylate, di(ethylene glycol) dimethacrylate, tri(ethylene glycol) dimethacrylate, tetra(ethylene glycol) dimethacrylate, pentaerythritol trimethacrylate, glycerol dimethacrylate, trimethylolpropane trimethacrylate, ethylene glycol diacrylate, pentaerythritol tetraacrylate, pentaerythritol triacrylate, neopentyl glycol diacrylate, 1,3-butanediol diacrylate, 1,4-butanediol diacrylate, 1,6-hexanediol diacrylate, propylene glycol diacrylate, di(ethylene glycol) diacrylate, tri(ethylene glycol) diacrylate, tetra(ethylene glycol) diacrylate, pentaerythritol triacrylate, glycerol diacrylate, and trimethylolpropane triacrylat;
more preferable examples include ethylene glycol dimethacrylate, pentaerythritol tetramethacrylate, pentaerythritol trimethacrylate, neopentyl glycol dimethacrylate, 1,3-butanediol dimethacrylate, 1,4-butanediol dimethacrylate, 1,6-hexanediol dimethacrylate, divinylbenzene, propylene glycol dimethacrylate, ethylene glycol diacrylate, pentaerythritol tetraacrylate, pentaerythritol triacrylate, neopentyl glycol diacrylate, 1,3-butanediol diacrylate, 1,4-butanediol diacrylate, 1,6-hexanediol diacrylate, and propylene glycol diacrylate; and ethylene glycol dimethacrylate, 1,3-butanediol dimethacrylate, 1,4-butanediol dimethacrylate, 1,6-hexanediol dimethacrylate, divinylbenzene, propylene glycol dimethacrylate, ethylene glycol diacrylate, 1,3-butanediol diacrylate, 1,4-butanediol diacrylate, 1,6-hexanediol diacrylate, and propylene glycol diacrylate are most preferable.

The crosslinking monomer (b) is preferably subj ected to seed polymerization so that the content ratio of the crosslinking monomer (b) is from 3% by mass to 80% by mass with respect to the composite particle (A), from the viewpoint of obtaining hard composite particles. The content ratio of the crosslinking monomer (b) is more preferably from 3% by mass to 70% by mass, and most preferably from 3% by mass to 60% by mass.

In the seed polymerization, in a case in which the crosslinking monomer (b) and a non-crosslinking monomer are mixed and used, the non-crosslinking monomer is preferably a monomer having an ethylenically unsaturated bond, and more preferably a hydrophobic monomer, from the viewpoint of obtaining harder composite particles.
Specific examples of the hydrophobic monomer include styrene, α-methylstyrene, methyl acrylate, ethyl acrylate, n-propyl acrylate, isopropyl acrylate, n-butyl acrylate, isobutyl acrylate, sec-butyl acrylate, tert-butyl acrylate, amyl acrylate, hexyl acrylate, 2-ethylhexyl acrylate, octyl acrylate, tert-octyl acrylate, 2-chloroethyl acrylate, 2-bromoethyl acrylate, 4-chlorobutyl acrylate, cyanoethyl acrylate, 2-acetoxyethyl acrylate, benzyl acrylate, methoxybenzyl acrylate, 2-chlorocyclohexyl acrylate, cyclohexyl acrylate, furfuryl acrylate, tetrahydrofurfuryl acrylate, phenyl acrylate, 2-phenoxyethyl acrylate, 5-hydroxypentyl acrylate, 2,2-dimethyl-3-hydroxypropyl acrylate, 2-methoxyethyl acrylate, 3-methoxybutyl acrylate, 2-ethoxyethyl acrylate, 2-butoxyethyl acrylate, 2-(2-methoxyethoxy)ethyl acrylate, 2-(2-butoxyethoxy)ethyl acrylate, glycidyl acrylate, 1-bromo-2-methoxyethyl acrylate, 1,1-dichloro-2-ethoxyethyl acrylate, 1,2,2,2-tetrafluoroethyl acrylate, 1H,1H,2H,2H-perfluorodecyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, hexyl methacrylate, benzyl methacrylate, chlorobenzyl methacrylate, octyl methacrylate, strearyl methacrylate, 2-(3-phenylpropyloxy)ethyl methacrylate, furfuryl methacrylate, tetrahydrofurfuryl methacrylate, phenyl methacrylate, 2-phenoxyethyl methacrylate, cresyl methacrylate, naphthyl methacrylate, 2-hydroxyethyl methacrylate, 4-hydroxybutyl methacrylate, tri(ethylene glycol) monomethacrylate, di(propylene glycol) monomethacrylate, 2-methoxyethyl methacrylate, 3-methoxybutyl methacrylate, 2-ethoxyethyl methacrylate, methoxy di(ethylene glycol) methacrylate, 2-isopropoxyethyl methacrylate, 2-butoxyethyl methacrylate, 2-(2-methoxyethoxy)ethyl methacrylate, 2-(2-ethoxyethoxy)ethyl methacrylate, 2-(2-butoxyethoxy)ethyl methacrylate, 2-acetoxyethyl methacrylate, 2-acetoacetoxyethyl methacrylate, allyl methacrylate, glycidyl methacrylate, 2,2,2-tetrafluoroethyl methacrylate, 1H,1H,2H,2H-perfluorodecyl methacrylate, and acrylic esters or methacrylic esters of cyclohexyl, cyclohexylmethyl, 3-cyclohexenylmethyl, 4-isopropylcyclohexyl, 1-methylcyclohexyl, 2-methylcyclohexyl, 3-methylcyclohexyl, 4-methylcyclohexyl, 1-ethylcyclohexyl, 4-ethylcyclohexyl, 2-tert-butylcyclohexyl, 4-tert-butylcyclohexyl, menthyl, 3,3,5-trimethylcyclohexyl, cycloheptyl, cyclooctyl, nonyl, cyclodecyl, 2-norbornyl, isobornyl, 3-methyl-2-norbornyl, dicyclopentanyl, dicyclopentenyl, dicyclopentenyloxyethyl, adamantan-1-yl, adamantan-2-yl, 2-methyladamantan-2-yl, 2-ethyladamantan-2-yl, 3,5-dimethyladamantan-1-yl, or 1,1'-bisadamantan-3-yl.

The average particle diameter of the composite particles (A) is not particularly limited. However, the volume average particle diameter of the composite particles (A) is preferably in a range of from 1 nm to 400 nm, more preferably from 3 nm to 200 nm, and even more preferably from 5 nm to 100 nm. When the volume average particle diameter is 1 nm or more, in the case of using the composite particles for preparing an aqueous ink composition, the aggregation property when an image is formed by aggregating the components in the ink composition may be enhanced, which is preferable. When the volume average particle diameter is 400 nm or less, ink jetting stability may be improved, which is preferable.
The particle size distribution of the composite particles is not particularly limited, and may be either a wide particle size distribution or a monodispersed particle size distribution. Moreover, two or more kinds of composite particles may be mixed and used.
The volume average particle diameter and particle size distribution of the composite particles may be measured by a dynamic light scattering method and the values measured by a dynamic light scattering method are used.

### <<Aqueous Ink Composition>>

The aqueous ink composition of the present invention (hereinafter, may be merely referred to as the "ink composition" or "ink") includes at least one kind of composite particles (A) of the present invention and at least one kind of colorant. The aqueous ink composition of the invention may further include a water-soluble organic solvent and/or other additives, as necessary.

The aqueous ink composition of the invention can be used not only for monochromatic image formation, but also for full color image formation. In order to form a full color image, a magenta color tone ink, a cyan color tone ink and a yellow color tone ink may be used. In order to control color tone, a black color tone ink may be further used. Moreover, inks other than a yellow tone ink, a magenta tone ink or a cyan color tone ink may be used such as a red ink, a green ink, a blue ink, a white ink, or a so-called specific color ink (for example, a colorless ink) employed in the printing field.

The content of the composite particles in the aqueous ink composition in the invention is preferably from 1 % by mass to 30 % by mass, and more preferably from 5 % by mass to 15 % by mass, relative to the aqueous ink composition, from the viewpoint of the glossiness of an image.
Further, the content ratio of the colorant to the composite particles (colorant/composite particle) in the aqueous ink composition in the invention is preferably from 1/0.5 to 1/10, and more preferably from 1/1 to 1/4, from the viewpoint of rubbing resistance of an image or the like.

### <Colorant>

Any known dyes, pigments and the like may be used without specific limitations as a colorant in the invention. In particular, it is preferable that the colorant is almost insoluble or slightly soluble in water, from the viewpoint of ink coloring property. Specifically, examples of the colorant include various pigments, disperse dyes, oil-soluble dyes and dyes capable of forming a J-aggregate, and the colorant is preferably a pigment.
In the invention, water-insoluble coloring particles may be a water-insoluble pigment itself or a pigment itself that is surface-treated with a dispersant.

The kinds of pigments in the invention are not particularly restricted, and any of conventionally known organic and inorganic pigments may be used. Examples of pigments include polycyclic pigments such as an azo lake, an azo pigment, a phthalocyanine pigment, a perylene pigment, a perynone pigment, an anthraquinone pigment, a quinacridone pigment, a dioxazine pigment, a diketopyrrolopyrrole pigment, a thioindigo pigment, an isoindolinone pigment and a quinophthalone pigment; dye lakes such as a basic dye lake and an acidic dye lake; organic pigments such as a nitro pigment, a nitroso pigment, aniline black and a daylight fluorescent pigment; and inorganic pigments such as titanium oxide, an iron oxide pigment and a carbon black pigment. Further, any pigments capable of being dispersed in an aqueous phase may be used, even if pigments are not described in Color Index. Furthermore, a pigment which is subjected to surface-treatment with a surfactant, a polymer dispersant or the like, and graft carbon, of course, may be used. Among these pigments, it is particularly preferable to use an azo pigment, a phthalocyanine pigment, an anthraquinone pigment, a quinacridone pigment and a carbon black pigment. Specifically, examples of pigments which may be used in the invention include pigments described in paragraph Nos. [0142] to [0145] of JP-ANo. 2007-100071.

(Dispersant)
When the colorant in the invention is a pigment, it is preferable that the pigment is dispersed in an aqueous solvent by a dispersant. The dispersant may be either a polymer dispersant or a low molecular weight surfactant-type dispersant. Further, the polymer dispersant may be either a water-soluble dispersant or a water-insoluble dispersant.
The low molecular weight surfactant-type dispersant (hereinafter, may be referred to as a "low molecular weight dispersant") can be added for dispersing an organic pigment in an aqueous solvent stably, while maintaining low viscosity of an ink. The low molecular weight dispersant herein means a low molecular weight dispersant having a molecular weight of 2,000 or less. The molecular weight of the low molecular weight dispersant is preferably from 100 to 2,000, and more preferably from 200 to 2,000.

The low molecular weight dispersant has a structure containing a hydrophilic group and a hydrophobic group. Further, each of at least one hydrophilic group and at least one hydrophobic group may be contained in one molecule independently. The low molecular weight dispersant may contain plural kinds of hydrophilic groups and hydrophobic groups, respectively, and may optionally contain a linking group for connecting a hydrophilic group an a hydrophobic group.

The hydrophilic group may be anionic, cationic, nonionic, or a betaine-type which is a combination thereof.
The anionic group is not particularly restricted as long as the anionic group has a negative charge. However, the anionic group is preferably a phosphoric acid group, a phosphonic acid group, a phosphinic acid group, a sulfuric acid group, a sulfonic acid group, a sulfinic acid group or a carboxylic acid group, more preferably a phosphoric acid group or a carboxylic acid group, and still more preferably a carboxylic acid group.

The cationic group is not particularly restricted as long as the cationic group has a positive charge. However the cationic group is preferably an organic cationic substituent, is more preferably a cationic group containing a nitrogen atom or a phosphorus atom, and is still more preferably a cationic group containing a nitrogen atom. In particular, the cationic group is preferably a pyridinium cation or an ammonium cation.
The nonionic group is not particularly restricted as long as the nonionic group does not contain a negative charge or a positive charge. Examples of the nonionic group include polyalkylene oxide, polyglycerin or a sugar unit of a certain kind.

In the invention, from the viewpoint of dispersion stability and aggregation property of pigment, it is preferable that the hydrophilic group is an anionic group.
Further, when the low molecular weight dispersant has an anionic hydrophilic group, the pKa thereof is preferably 3 or more, from the viewpoint of promoting an aggregation reaction by bringing the low molecular weight dispersant into contact with an acidic treatment liquid. The pKa value of the low molecular weight dispersant in the invention is the value obtained experimentally from a titration curve obtained in such a manner that a liquid in which a low molecular weight dispersant is dissolved in a solution of tetrahydrofuran and water (3:2 (V/V)) at a concentration of 1 mmol/L is titrated with an acid or an alkali.
Theoretically, if the pKa of the low molecular weight dispersant is 3 or more, when the low molecular weight dispersant is brought into contact with a treatment liquid having a pH of about 3, 50 % or more of anionic groups is in an undissociated state. Accordingly, water solubility of the low molecular weight dispersant decreases significantly, and an aggregation reaction occurs. That is, aggregation reactivity improves. From this point of view, it is preferable that the low molecular weight dispersant have a carboxylic acid group as an anionic group.

On the other hand, although the hydrophobic group may have any one of a hydrocarbo based structure, a fluorocarbon based structure, a silicone based stryctyre, or the like, it is particularly preferable that the hydrophobic group has a hydrocarbon based structure. Further, the hydrophobic group may either have a straight-chained structure or a branched structure. Moreover, the hydrophobic group may have a structure with a single chain or a structure with two or more chains, and when the hydrophobic group has a structure with two or more chains, the hydrophobic group may contain plural kinds of hydrophobic groups.

The hydrophobic group preferably has a hydrocarbon group having from 2 to 24 carbon atoms, more preferably a hydrocarbon group having from 4 to 24 carbon atoms, and still more preferably a hydrocarbon group having from 6 to 20 carbon atoms.

Among a polymer dispersant in the invention, as a water-soluble dispersant, hydrophilic polymer compounds may be used. Examples of natural hydrophilic polymer compounds include plant-derived polymers such as gum arabic, tragacanth gum, guar gum, gum Karaya, Locust bean gum, arabinogalactone, pectin or quince seed starch, sea weed-derived polymers such as alginic acid, carrageenan or agar, animal-derived polymers such as gelatin, casein, albumin or collagen, and microorganism-derived polymers such as xanthene gum or dextrin.

Further, examples of hydrophilic polymer compounds formed by chemically modifying natural products as raw materials include cellulose polymers such as methyl cellulose, ethyl cellulose, hydroxyethyl cellulose, hydroxypropyl cellulose and carboxymethyl cellulose, starch polymers such as sodium starch glycolate and sodium starch phosphate ester, and sea weed polymers such as propylene glycol alginate ester.

Examples of synthetic water-soluble polymer compounds include vinyl polymers such as polyvinyl alcohol, polyvinyl pyrrolidone and poly(vinylmethylether); acryl resins such as polyacrylamide, polyacrylic acid, an alkali metal salt thereof, and water-soluble styrene acrylic resins; water-soluble styrene maleic acid resins, water-soluble vinyl naphthalene acrylic resins, water-soluble vinyl naphthalene maleic acid resin, polyvinyl pyrrolidone, polyvinyl alcohol, an alkali metal salt of β-naphthalenesulfonic acid-formalin condensate, and polymer compounds having a salt of a cationic functional group such as a quaternary ammonium, an amino group or the like at the side chain.

Among them, from the viewpoint of dispersion stability and aggregation property of pigment, polymer compounds containing a carboxyl group are preferable, and for example, carboxyl group-containing polymer compounds such as acrylic resins (such as a water-soluble styrene acrylic resin), a water-soluble styrene maleic acid resin, a water-soluble vinyl naphthalene acrylic resin and a water-soluble vinyl naphthalene maleic acid resin, are preferable.

Among these polymer dispersants, as a water-insoluble dispersant, a polymer having both a hydrophobic moiety and a hydrophilic moiety may be used. Examples of such polymer dispersants include a styrene-(meth)acrylic acid copolymer, a styrene-(meth)acrylic acid-(meth)acrylic acid ester copolymer, a (meth)acrylic acid ester-(meth)acrylic acid copolymer, a polyethyleneglycol (meth)acrylate-(meth)acrylic acid copolymer, a styrene-maleic acid copolymer.

The weight average molecular weight of the polymer dispersant in the invention is preferably from 3,000 to 200,000, more preferably from 5,000 to 100,000, still more preferably from 5,000 to 80,000, and particularly preferably from 10,000 to 60,000.
The weight average molecular weight can be measured by a gel permeation chromatographic method (GPC), for example.

The mass mixing ratio (pigment: dispersant) of a pigment and a dispersant is preferably in the range of from 1:0.06 to 1:3, more preferably in the range of from 1:0.125 to 1:2, and still more preferably in the range of from 1:0.125 to 1:1.5.

In the invention, when a dye is used as a colorant, particles, in which the dye is held by a water-insoluble carrier, may be used as water-insoluble coloring particles. As a dye, any known dyes may be used without particular limitations, and, for example, the dyes described in JP-ANos. 2001-115066, 2001-335714 and 2002-249677 may be suitably used in the invention. Moreover, any carriers may be used without specific limitations, as long as the carrier is insoluble or poorly soluble in water, and inorganic materials, organic materials and the composite materials of these materials may be used. Specifically, the carriers described in JP-A Nos. 2001-181549 and 2007-169418 may suitably be used in the invention.
The carrier (water-insoluble coloring particle) holding a dye may be used as an aqueous dispersion using a dispersant. As the dispersant, the dispersant above may suitably be used.

The colorant (water-insoluble coloring particle) in the invention preferably contains a pigment and a dispersant from the viewpoints of light fastness of an image, the image quality and the like, more preferably contains an organic pigment and a polymer dispersant, and particularly preferably contains an organic pigment and a polymer dispersant containing a carboxyl group.

In the invention, the average particle diameter of water-insoluble coloring particles is preferably from 10 nm to 200 nm, more preferably from 10 nm to 150 nm, and still more preferably from 10 nm to 100 nm. When the average particle diameter is 200 nm or less, color reproducibility is good, and ink droplet jetting property is good in an inkjet recording method. Further, when the average particle diameter is 10 nm or more, the light fastness is good.
The particle size distribution of the water-insoluble coloring particles is not particularly restricted, may be either a wide particle size distribution or a monodispersed particle size distribution. Moreover, two or more kinds of water-insoluble coloring particles having monodispersed particle size distribution may be mixed and used.
In addition, the average particle diameter and particle size distribution of the water-insoluble coloring particles may be measured, for example, by a light scattering method.

In the invention, one kind of the water-insoluble coloring particles may be used alone, or two or more kinds of the water-insoluble coloring particles may be used in combination.
From the viewpoint of image density, the content of the water-insoluble coloring particles is preferably from 1 % by mass to 25 % by mass, more preferably from 2 % by mass to 20 % by mass, still more preferably from 5 % by mass to 20 % by mass, and particularly preferably from 5 % by mass to 15 % by mass relative to the aqueous ink composition.

### <Water-Soluble Organic Solvent>

The aqueous ink composition of the invention contains water as a solvent. However, the aqueous ink composition may further contain a water-soluble organic solvent. The water-soluble organic solvent may be contained as a dryness inhibitor and a permeation promoter, for example.
In particular, when the aqueous ink composition of the invention is applied to an image recording method using an inkjet system, the dryness inhibitor can effectively prevent nozzle clogging which may be caused by dryness of the ink in an ink-jetting orifice.

The dryness inhibitor is preferably a water-soluble organic solvent whose vapor pressure is lower than that of water. Specific examples of the dryness inhibitor include polyhydric alcohols represented by, for example, ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower alkyl ethers of polyhydric alcohols such as ethylene glycol monomethyl(or ethyl)ether, diethylene glycol monomethyl (or ethyl)ether, and triethylene glycol monoethyl(or butyl)ether; heterocycles such as 2-pyrrolidone, N-methyl-2-pyrrolidone, 1, 3-dimethyl-2-imidazolidinone and N-ethyl morpholine; sulfur-containing compounds such as sulfolane, dimethyl sulfoxide and 3-sulfolene; polyfunctional compounds such as diacetone alcohol and diethanolamine; and urea derivatives. In particular, as a dryness inhibitor, a polyhydric alcohol such as glycerin, diethylene glycol or the like is preferable. Moreover, one kind of the dryness inhibitor may be used alone, or two or more kinds of the dryness inhibitors may be used in combination. The dryness inhibitor is preferably contained in an ink in an amount of 10 % by mass to 50 % by mass.

Further, a permeation promoter is suitably used for better penetration of an ink into a recording medium (print sheet). Specific examples of the permeation promoters include alcohols such as ethanol, isopropanol, butanol, di(tri)ethylene glycol monobutyl ether and 1,2-hexanediol, sodium laurylsulfate, sodium oleate, and nonionic surfactants. The permeation promoter is contained in 5 % by mass to 30 % by mass in the ink composition, thereby exerting a sufficient effect. The permeation promoter is preferably used in an addition amount to the extent that the permeation promoter does not cause bleeding of a printed image or a print-through.

Further, the water-soluble organic solvent may also be used for adjusting the viscosity in addition to the above. Specific examples of the water-soluble organic solvent which may be used for adjusting the viscosity include alcohols (for example, methanol, ethanol, propanol, isopropanol. butanol, isobutanol, sec-butanol, t-butanol, pentanol, hexanol, cyclohexanol, and benzyl alcohol); polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol); glycol derivatives (for example, ethyleneglycol monomethylether, ethyleneglycol monoethylether, ethyleneglycol monobutylether, diethyleneglycol monomethylether, diethyleneglycol monobutylether, propyleneglycol monomethylether, propyleneglycol monobutylether, dipropyleneglycol monomethylether, triethyleneglycol monomethylether, ethyleneglycol diacetate, ethyleneglycol monomethylether acetate, triethyleneglycol monomethylether, triethyleneglycol monoethylether and ethyleneglycol monophenylether); amines (for example, ethanolamine, diethanolamine, triethanolamine, N-methyl diethanolamine, N-ethyl diethanolamine, morpholine, N-ethyl morpholine, ethylenediamine, diethylene triamine, triethylenetetramine, polyethyleneimine, and tetramethyl propylenediamine); and other polar solvents (for example, formamide, N,N-dimethyl formamide, N,N-dimethyl acetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone).
One kind of the water-soluble organic solvent may be used alone, or two or more kinds the water-soluble organic solvents may be used in combination.

### <Polymerizable Compound>

The aqueous ink composition of the present invention may contain a poymerizable compound. The polymerizable compound may be either a water-insoluble compound or a water-soluble compound, however it is preferable that the polymerizable compound is a water-soluble polymerizable compound having an ethylenically unsaturated double bond (hereinafter, may be referred to as a "specific polymerizable compound").
When the aqueous ink composition of the present invention contains the polymerizable compound, the image can be fixed by photo-irradiation using an ultraviolet lamp or the like, after the ejection of the ink composition. Details are described below.

The specific polymerizable compound may be any compound so long as the compound has at least one radically polymerizable ethylenically unsaturated bond in the molecule, wherein the compound may have a chemical form of a monomer, an oligomer, a polymer, or the like. One specific polymerizable compound may be used alone, or two or more specific polymerizable compounds may be used in combination at any ratio for the purpose of improving intended properties. It is preferable to use two or more specific polymerizable compounds in combination, from the viewpoint of controlling performance in terms of reactivity, physical properties, and the like. Further, from the viewpoint of the ink jetting stability, it is preferable to use a compound which has good solubility with respect to water and is less likely to deposit in the aqueous ink composition.

The specific polymerizable compound used in the present invention is preferably a compound that dissolves in distilled water at 25°C at a proportion of 2% by mass or more, more preferably a compound that dissolves in distilled water at 15% by mass or more, and particularly preferably a compound that may be homogeneously mixed with water at any proportion.

Examples of the specific polymerizable compound include unsaturated carboxylic acids such as acrylic acid, methacrylic acid, itaconic acid, crotonic acid, isocrotonic acid, and maleic acid, ester derivatives thereof, amide derivatives thereof, and salts thereof; anhydrides having an ethylenically unsaturated group; acrylonitrile; styrene; and various unsaturated polyesters, unsaturated polyethers, unsaturated polyamides, unsaturated urethanes, vinyl ethers, and allyl ethers. Among them, the specific compound is preferably at least one selected from the group consisting of acrylic acid, methacrylic acid, ester derivatives of acrylic acid or methacrylic acid, amide derivatives of acrylic acid or methacrylic acid, and salts thereof. The specific compound is more preferably at least one selected from the group consisting of monoesters of acrylic acid, and monoesters of methacrylic acid (hereinafter, may be referred to as "monoacrylates"), esters of acrylic acid and a polyol compound, and esters of methacrylic acid and a polyol compound (hereinafter, may be referred to as "polyfunctional acrylate monomers" or "polyfunctional acrylate oligomers"), acrylamide, methacrylamide, and derivatives of acrylamide or methacrylamide.

It is preferable that the specific polymerizable compound used in the present invention has a poly(ethyleneoxy) chain, a poly(propyleneoxy) chain, an ionic group (for example, a carboxyl group, a sulfo group, or the like), or a hydroxyl group, in order to impart water solubility. In a case in which the specific polymerizable compound has a poly(ethleneoxy) chain or a poly(propyleneoxy) chain, the number of ethyleneoxy units or propyleneoxy units is preferably in a range of from 1 to 10, and more preferably in a range of from 1 to 5. When the number of the units is 10 or less, the hardness of the film after curing, the adhesion to the recording medium, and the like may be enhanced.

Further, it is preferable to use, as the specific polymerizable compound, a monoacrylate and a polyfunctional acrylate monomer or polyfunctional acrylate oligomer having a molecular weight of 400 or more, preferably 500 or more, in combination for the purpose of further improving the sensitivity, bleeding resistance, and adhesion to the recording medium. Particularly, in the ink composition used for recording on a soft recording medium such as PET (polyethylene terephthalate) film or PP (polypropylene) film, it is preferable to use a monoacrylate selected from the above compound group and a polyfunctional acrylate monomer or a polyfunctional acrylate oligomer in combination, from the viewpoints of imparting flexibility to the film formed, enhancing the adhesion, and at the same time, enhancing the film strength.
Further, an embodiment in which at least two polymerizable compounds from among a monofunctional monomer, a bifunctional monomer, and a polyfunctional monomer having a functionality of three or more are used in combination is preferable, from the viewpoint that the sensitivity, bleeding resistance, and adhesion to the recording medium can be further improved while maintaining the safety.

Preferable examples of the specific polymerizable compound include the compounds having a structure shown below. However, it should be construed that the specific polymerizable compound used in the present invention is not limited to these compounds.

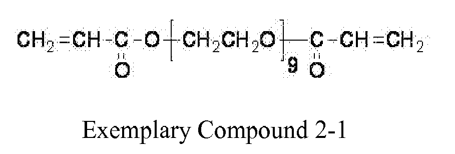

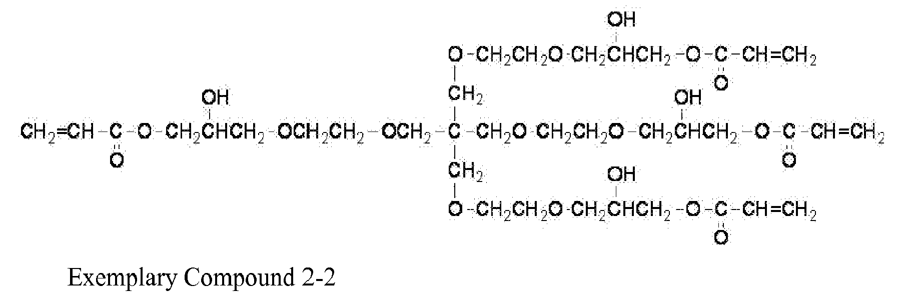

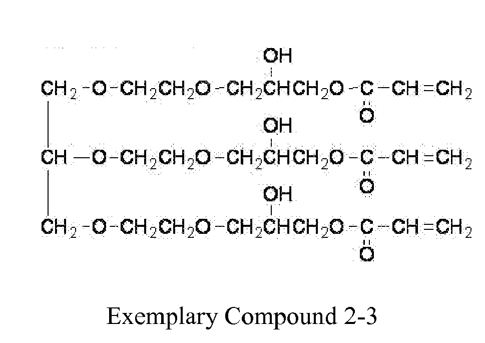

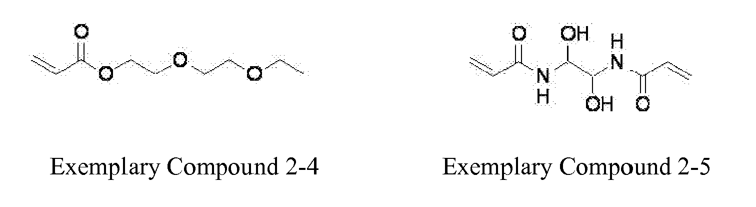

Further, in addition to the above exemplary compounds, compounds having an ionic group, for example, methacrylic acid or 3-sulfopropyl acrylate potassium salt, are also preferably used.

The content ratio of the polymerizable compound having an ethylenically unsaturated bond in the aqueous ink composition of the present invention is preferably from 1% to 30%, and more preferably from 5% to 20%, on the basis of mass, with respect to the total mass of the aqueous ink composition.

### <Polymerization Initiator>

The aqueous ink composition of the present invention may contain a polymerization initiator together with the polymerizable compound.
The polymerization initiator may be either a thermal polymerization initiator or a photopolymerization initiator, but is preferably a photopolymerization initiator. Further, as the polymerization initiator, any of a substance obtained by dispersing a water-insoluble polymerization initiator in water or a water-soluble polymerization initiator may be used; however, a water-soluble polymerization initiator is preferably used.
Note that, the term "water-soluble" means that the compound is dissolves in distilled water at 25°C at a proportion of 0.5% by mass or more. The water-soluble polymerization initiator preferably dissolves in distilled water at 25°C at a proportion of 1% by mass or more, and more preferably dissolves at a proportion of 3% by mass or more.

Examples of the polymerization initiator may include acetophenones, α-aminoketones, benzophenones, alkylphenones, benzyls, benzoins, benzoin ethers, benzyl dialkyl ketals, thioxanthons, acylphosphine oxides, metal complexes, p-dialkylaminobenzoic acid, azo compounds, and peroxide compounds. Among them, acetophenones, α-aminoketones, alkylphenones, benzyls, benzoin ethers, benzyl dialkyl ketals, thioxanthons, and acylphosphine oxides are preferable, and α-aminoketones, acylphosphine oxides, and alkylphenones are more preferable.

Examples of the compounds included in the α-aminoketones include 2-methyl-1-phenyl-2-morpholinopropan-1-one,
2-methyl-1-[4-(hexyl)phenyl]-2-morpholinopropan-1-one,
2-ethyl-2-dimethylamino-1-(4-morpholinophenyl)-butan-1-one.
Further, there are commercially available products such as IRGACURE series (trade name) manufactured by BASF (former Ciba), for example, IRGACURE 907, IRGACURE 369, and IRGACURE 379 (all trade names), and they are also the compounds included in the α-aminoketones, and can be suitably employed in the present invention.

Examples of the compounds included in the acylphosphine oxides include 2,4,6-trimethylbenzoyl-diphenyl-phosphine oxide and
bis(2,4,6-trimethylbenzoyl)-phenylphosphine oxide.
Examples of the compounds included in the alkylphenones include
2,2-dimethoxy-1,2-diphenylethan-1-one, 1-hydroxycyclohexyl phenyl ketone,
2-hydroxy-2-methyl-1-phenyl-propan-1-one,
1-[4-(2-hydroxyethoxy)-phenyl]-2-hydroxy-2-methyl-1-propan-1-one,
2-hydroxy-1-{4-[4-(2-hydroxy-2-methyl-propionyl)-benzyl]phenyl}-2-methyl-propan-1-one. There are commercially available products such as IRGACURE series (trade name) manufactured by BASF (former Ciba), for example, IRGACURE 651, IRGACURE 184, IRGACURE 1173, IRGACURE 2959, and IRGACURE 127 (all trade names), which are also the compounds included in the alkylphenones, and can be suitably employed in the present invention.

Further, examples of the photopolymerization initiator may include the photopolymerization initiators described on pages 65 to 148 of "SHIGAISEN KOKA SISUTEMU (Ultraviolet Ray Curing System)" written by Kiyoshi KATO (published by Comprehensive Technology Center, 1989). One of these photopolymerization initiators may be used alone or two or more of these photopolymerization initiators may be used in combination. Further, the photopolymerization initiator may be used in combination with a sensitizing agent.

It is preferable that the photopolymerization initiator does not cause thermal decomposition at a temperature equal to or lower than 80°C. When an initiator that decomposes at a temperature equal to or lower than 80°C is used, there may be problems in terms of storage of the products, which is not preferable.

In the present invention, one kind of the polymerization initiator may be used alone or two or more kinds of the polymerization initiators may be used in combination.
The content ratio of the polymerization initiator in the aqueous ink composition of the invention is preferably in a range of from 0.1 % to 7%, and more preferably from 0.3% to 5%, on the basis of mass, with respect to the total mass of the aqueous ink composition.

Further, the content of the polymerization initiator in the aqueous ink composition of the invention is preferably in a range of from 0.01 parts by mass to 35 parts by mass with respect to 100 parts by mass of the polymerizable compound having an ethylenically unsaturated bond. The content is more preferably in a range of from 0.1 parts by mass to 30 parts by mass, and even more preferably in a range of from 0.5 parts by mass to 30 parts by mass. Note that, "the content of the polymerization initiator" used herein means the total polymerization initiator content.

### <Other Additives>

Examples of other additives in the invention include known additives such as an anti-fading agent, an emulsion stabilizer, an permeation promoter, a ultraviolet absorber, an antiseptic agent, an antifungal agent, a pH adjuster, a surface tension adjuster, a defoaming agent, a viscosity adjuster, a dispersant, a dispersion stabilizer, a rust preventing agent and a chelating agent. These additives may be directly added to an aqueous ink composition after the aqueous ink composition is prepared, or may be added to an aqueous ink composition during the preparation of the aqueous ink composition.

Examples of the ultraviolet absorber include benzotriazole compounds, benzophenone compounds, cinnamic acid compounds, triazine compounds, or compounds absorbing ultraviolet radiation and emitting fluorescent light such as the compounds disclosed in Research Disclosure No. 24239, stilbene compounds and benzoxazole compounds.

As an anti-fading agent, various kinds of organic anti-fading agents or metal complex anti-fading agents may be used. Examples of the organic anti-fading agents include hydroquinones, alkoxy phenols, dialkoxy phenols, phenols, anilines, amines, indans, coumarones, alkoxy anilines and heterocyles, and examples of the metal complex anti-fading agents include nickel complexes and zinc complexes.

Examples of the antifungal agents include sodium dehydroacetate, sodium benzoate, sodium pyridinethione-1-oxide, ethyl p-hydroxybenzoate, 1,2-benzisothiazoline-3-one and a salt thereof. These antifungal agents are preferably used in an amount of 0.02 % by mass to 1.00 % by mass in the aqueous ink composition.
As a pH adjuster, a neutralizer (organic base, inorganic alkali) may be used. The pH adjuster is added to an aqueous ink composition so that the pH of the aqueous ink composition is preferably from 6 to 10, and more preferably from 7 to 10 for the purpose of improving storage stability of the aqueous ink composition.

Examples of the surface tension adjuster include a nonionic surfactant, a cationic surfactant, an anionic surfactant or a betaine surfactant.
The addition amount of the surface tension adjuster to the aqueous ink composition is such that the surface tension of the aqueous ink composition is preferably adjusted to a range from 20 mN/m to 60 mN/m, more preferably from 20 mN/m to 45 mN/m, and still more preferably from 25 mN/m to 40 mN/m, in order to suitably jet ink droplets in an inkjet recording method. On the other hand, when an ink is applied by a method other than an inkjet recording method, the surface tension is adjusted preferably to a range from 20 mN/m to 60 mN/m, and more preferably from 30 mN/m to 50 mN/m.
The surface tension (25°C) of the aqueous ink composition may be measured using a plate method, for example.

Specific examples of hydrocarbon surfactants include anionic surfactants such as an aliphatic acid salt, an alkyl sulfate ester salt, an alkyl benzenesulfonate salt, an alkyl naphthalenesulfonate salt, a dialkyl sulfosuccinate salt, an alkyl phosphate ester salt, a naphthalenesulfonic acid-formalin condensate and a polyoxyethylene alkyl sulfate ester salt; and nonionic surfactants such as a polyoxyethylene alkyl ether, a polyoxyethylene alkyl allyl ether, a polyoxyethylene fatty acid ester, a sorbitan fatty acid ester, a polyoxyethylene sorbitan fatty acid ester, polyoxyethylene alkylamine, a glycerin fatty acid ester, and an oxyethylene oxypropylene block copolymer. Further, SURFYNOLS (manufactured by Air Products and Chemicals, Inc.) and OLFINE E1010 (manufactured by Nisshin Chemical Industry Co., Ltd.) as acetylene polyoxyethyleneoxide surfactants are preferably used. Moreover, an amine oxide amphoteric surfactant such as N,N-dimethyl-N-alkylamine oxide is also preferable.
Furthermore, surfactants described in JP-A No. 59-157636, on pages 37 to 38, and Research Disclosure No. 308119 (1989) may also be used.
Moreover, when using fluorine (fluorinated alkyl) surfactants or silicone surfactants described in JP-A Nos. 2003-322926, 2004-325707 and 2004-309806, rubbing resistance can also be improved.
The surface tension adjuster may also be used as a defoaming agents and fluorine-containing compounds, silicone-containing compounds, chelating agents represented by EDTA or the like may also be used.

When an ink is applied by an inkjet method, from the viewpoint of ink jetting stability and an aggregation speed, the viscosity of the aqueous ink composition of the invention is preferably in the range of from 1 mPa·s to 30 mPa·s, more preferably in the range of from 1 mPa·s to 20 mPa·s, still more preferably in the range of from 2 mPa·s to 15 mPa·s, and particularly preferably in the range of from 2 mPa·s to 10 mPa·s.
Further, when an ink is applied by a method other than an inkjet method, the viscosity of the aqueous ink composition of the invention is preferably in the range of from 1 mPa·s to 40 mPa·s, and more preferably in the range of from 5 mPa·s to 20 mPa·s.
The viscosity (20°C) of the aqueous ink composition may be measured with a Brookfield viscometer, for example.

### <<Ink Set>>

An ink set of the invention includes at least one aqueous ink composition of the invention described above, and at least one treatment liquid capable of forming aggregates when the treatment liquid is brought into contact with the aqueous ink composition.
Details of the aqueous ink composition are described above.

### <Treatment Liquid>

As the treatment liquid, a treatment liquid capable of forming aggregates by bringing the treatment liquid into contact with the ink composition may be used. Specifically, the treatment liquid in the invention preferably contains at least an aggregating component capable of forming aggregates by aggregating dispersed particles such as colorant particles (pigment and the like) in the ink composition, and optionally, other components may be contained. When using the treatment liquid together with the aqueous ink composition, for example, the speed of inkjet recording can be increased, and even if high speed recording is performed, excellent image forming property (for example, reproducibility of fine lines or minute portions) with high density and high resolution can be achieved.

### (Aggregating component)

The treatment liquid may contain at least one aggregating component capable of forming aggregates by bringing the treatment liquid into contact with the ink composition. The aqueous ink composition applied to a recording medium comes into contact with the aggregating component in the treatment liquid, whereby the aggregation of pigment particles or the like which are stably dispersed in the ink composition is promoted.

Examples of the treatment liquid include a liquid capable of forming aggregates by changing the pH of an ink composition. At this time, the pH (25C° ± 1°C) of the treatment liquid is preferably from 1 to 6, more preferably from 1.2 to 5 and still more preferably from 1.5 to 4 from the viewpoint of the aggregating speed of the ink composition. In this case, the pH (25C° ± 1°C) of the ink composition used in a jetting process is preferably from 7.5 to 9.5 (more preferably from 8.0 to 9.0).
In particular, in the invention, it is preferable that an ink composition having a pH (25C° ± 1°C) of 7.5 or more, and a treatment liquid having a pH (25C° ± 1°C) of from 1.5 to 3 from the viewpoint of an image density, a resolution and a higher speed of inkjet recording.
One kind of the aggregating component may be used singly, or two or kinds of the aggregating components may be used as a mixture.

The treatment liquid may be formed using at least one of acidic compound as an aggregating component. Examples of the acidic compound include a compound having a phosphoric acid group, a phosphonic acid group, a phosphinic acid group, a sulfuric acid group, a sulfonic acid group, a sulfinic acid group, or a carboxyl group, or a salt thereof (for example, polyvalent metal salt). Among them, a compound having a phosphoric acid group or a carboxyl group is preferable, and a compound having a carboxyl group is more preferable, from the viewpoint of aggregating speed of the ink composition.

The compound having a carboxyl group is preferably selected from polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidone carboxylic acid, pyrone carboxylic acid, pyrrole carboxylic acid, furan carboxylic acid, pyridine carboxylic acid, coumalic acid, thiophene carboxylic acid, nicotinic acid, or a derivative of these compounds or a salt (for example, polyvalent metal salt) of these compounds. One kind of these compounds may be used singly, or two or kinds of these compounds may be used together.

The treatment liquid in the invention may include an aqueous solvent (for example, water) in addition to the acidic compound and the like.
The content of the acidic compound in the treatment liquid is preferably from 5 % by mass to 95 % by mass, more preferably from 10 % by mass to 80 % by mass, and still more preferably from 15 % by mass to 50 % by mass, relative to a total mass of the treatment liquid, from the viewpoint of an aggregation effect.

Further, the treatment liquid may be a treatment liquid containing at least one polyvalent metal salt as an aggregating component, whereby high-speed aggregation may be further enhanced. Examples of the polyvalent metal salt include salts of alkali earth metals (for example, magnesium or calcium) from the second group of the Periodic Table, salts of transition metals (for example, lanthanum) from the third group of the Periodic Table, salts of metals (for example, aluminum) of the 13th group of the Periodic Table, and salts of lanthanides (for example, neodymium). As metal salts, a carboxylate salt (a formate salt, an acetate salt, a benzoate salt or the like), a nitrate salt, a chloride and a thiocyanate salt are suitable. In particular, a calcium salt or a magnesium salt of carboxylic acids (formic acid, acetic acid, benzoic acid and the like), a calcium salt or a magnesium salt of nitric acid, calcium chloride, magnesium chloride, and a calcium salt or a magnesium salt of thiocyanic acid are preferable.

The content of the metal salt in the treatment liquid is preferably in the range of from 1 % by mass to 10 % by mass, more preferably in the range of from 1.5 % by mass to 7 % by mass, and still more preferably in the range of from 2 % by mass to 6 % by mass, from the viewpoint of an aggregation effect.

Further, the treatment liquid may be formed using at least one cationic organic compound as an aggregating component. Examples of the cationic organic compound include cationic polymers such as poly(vinyl pyridine) salt, polyalkyl aminoethyl acrylate, polyalkyl aminoethylmethacrylate, poly(vinylimidazole), polyethyleneimine, polybiguanide, polyguanide or polyallylamine, and a derivative thereof.

The cationic polymer has preferably a smaller weight average molecular weight, from the viewpoint of viscosity of the treatment liquid. When the treatment liquid is applied to a recording medium by an inkjet method, the molecular weight is preferably in the range of from 1,000 to 500,000, more preferably in the range of from 1,500 to 200,000, and still more preferably in the range of from 2,000 to 100,000. The weight average molecular weight of 1000 or more is advantageous from the viewpoint of the aggregating speed, and the weight average molecular weight of 500,000 or less is advantageous in view of jetting reliability. However, when the treatment liquid is applied to a recording medium by methods other than an inkjet recording method, the preferable weight average molecular weight is not limited to these ranges.

Further, the cationic organic compound is preferably a primary, secondary or tertiary amine salt compound. Examples of the amine salt compound include cationic compounds such as compounds of hydrochloric acid salts or acetic acid salts (for example, lauryl amine, coconut amine, stearyl amine, rosin amine and the like), quaternary ammonium salt compounds (for example, lauryl trimethyl ammonium chloride, cetyl trimethyl ammonium chloride, lauryldimethyl benzyl ammonium chloride, benzyl tributyl ammonium chloride, benzalkonium chloride and the like), pyridinium salt compounds (for example, cetyl pyridinium chloride, cetyl pyridinium bromide and the like), imidazoline cationic compounds (for example, 2-heptadecenyl-hydroxyethyl imidazoline and the like), or an ethylene oxide adduct of a higher alkyl amine (for example, dihydroxyethyl stearyl amine and the like); and amphoteric surfactants, which exhibit cationic property in a desired pH range such as an amino acid amphoteric surfactant, an R-NH-CH₂CH₂-COOH compound (R represents an alkyl group and the like), a carboxylic acid salt amphoteric surfactant (for example, stearyldimethyl betaine, lauryl dihydroxyethyl betaine and the like) a sulfuric acid ester amphoteric surfactant, sulfonic acid amphoteric surfactant and phosphoric acid ester amphoteric surfactant.
Among them, a divalent or higher valent cationic organic compound is preferable.

The content of the cationic organic compound in the treatment liquid is preferably from 1 % by mass to 50 % by mass, and more preferably from 2 % by mass to 30 % by mass, from the viewpoint of an aggregation effect.

Among them, the aggregating component is preferably a divalent or higher valent carboxylic acid, or a divalent or higher valent cationic organic compound, from the viewpoint of aggregation property and rubbing resistance of an image.

### (Other Components)

In general, the treatment liquid in the invention may contain a water-soluble organic solvent in addition to the aggregating component, and may contain various other additives, to the extent that the effect of the invention is not impaired. Details of the water-soluble organic solvent of the ink composition as described above may be applied as details of the water-soluble organic solvent in the treatment liquid.

Examples of other additives in the invention include known additives such as a dryness inhibitor (moistening agent), an anti-fading agent, an emulsion stabilizer, a permeation promoter, a ultraviolet absorber, an antiseptic agent, an antifungal agent, a pH adjuster, a surface tension adjuster, a defoaming agent, a viscosity adjuster, a dispersant, a dispersion stabilizer, a rust preventing agent and a chelating agent, and specific examples in other additives in the ink composition described above may also be used in the treatment liquid.

The viscosity of the treatment liquid is preferably in the range of from 1 mPa·s to 30 mPa·s, more preferably in the range of from 1 mPa·s to 20 mPa·s, still more preferably in the range of from 2 mPa·s to 15 mPa·s, and particularly preferably in the range of from 2 mPa·s to 10 mPa·s, from the viewpoint of aggregation speed of an ink composition.
The viscosity is measured with VISCOMETER TV-22 (trade name; manufactured by Toki Sangyo Co., Ltd.) under a condition of a temperature of 20°C.

Moreover, the surface tension of the treatment liquid is preferably from 20 mN/m to 60 mN/m, more preferably from 20 mN/m to 45 mN/m, and still more preferably from 25 mN/m to 40 mN/m, from the viewpoint of ink aggregation speed.
The surface tension is measured with AUTOMATIC SURFACE TENSIOMETER CBVP-Z (trade name; manufactured by Kyowa Interface Science Co., Ltd.) under a condition of a temperature of 25°C.

### <<Image Forming Method>>

The image forming method of the invention includes an ink-applying process in which the aqueous ink composition is applied to a recording medium, and a heat-fixing process in which an image is formed by heat-fixing the recording medium to which the aqueous ink composition is applied. The image forming method may further include additional process(es), if needed.
Examples of additional processes include a treatment liquid-applying process in which a treatment liquid capable of forming aggregates is brought into contact with the aqueous ink composition, and a heat-drying process.

According to the image forming method of the invention, since the aqueous ink composition contains a colorant and the composite particles, it is possible to stably form a high quality image for a long term period.

### [Ink-Applying Process]

In the ink-applying process, an image is formed by applying the aqueous ink composition of the invention to a recording medium. In this process, a desired visible image can be formed by selectively applying the aqueous ink composition onto the recording medium. Examples of the method of applying the aqueous ink composition include an inkjet method, a mimeograph method, or a transfer printing method. Among them, a method of applying the aqueous ink composition by an inkjet method is preferable, from the viewpoint of the downsizing of a recording apparatus and high-speed recording.
Details of each component in the aqueous ink composition of the invention and preferred embodiments are described above.

Specifically, the image recording utilizing an inkjet method can be performed by jetting, onto a desired recording medium, a liquid composition using application of energy. The desired recording medium may be plain paper, resin coated paper, paper exclusively used for inkjet recording described in JP-A Nos. 8-169172, 8-27693, 2-276670, 7-276789, 9-323475, 62-238783, 10-153989, 10-217473, 10-235995, 10-217597 and 10-337947, film, paper for common use in inkjet and electrophotographic recording, cloth, glass, metal, ceramics or the like. In addition, as the inkjet recording method which is preferably used for the invention, the method described in paragraph Nos. [0093] to [0105] of JP-A No. 2003-306623 can be used.

The inkjet method is not particularly restricted. However, any known methods, for example, a charge control system of jetting an ink by utilizing an electrostatic attractive force; a drop-on-demand system (pressure pulse system) of jetting an ink by utilizing the vibration pressure of a piezoelectric element; an acoustic inkjet system of converting electric signals into acoustic beams, irradiating them to an ink, and jetting the ink by utilizing radiation pressure; or a thermal inkjet (BUBBLEJET (registered trade mark)) system of jetting the ink by utilizing a pressure generated by bubbles formed by heating an ink, may be used.
In addition, the inkjet methods include a system of a large number of small-volume of ink droplets of low concentration ink called photo ink, a system of improving image quality using plural kinds of inks of substantially identical hue and different densities, and a system of using a colorless and transparent ink.
Ink nozzles and the like when recording is performed by an inkjet method are not particularly restricted, and may be appropriately selected according the intended use.

Examples of the inkjet head include an inkjet head of a shuttle system in which a short serial head is used and recording is performed while allowing the head to move in the width direction of a recording medium in a scanning manner, and an inkjet head of a line system in which a line head in which recording elements are arranged corresponding to the entire length of one side of a recording medium is used. In the line system, an image can be recorded over the entire surface of the recording medium by allowing the recording medium to be moved in a direction orthogonal to the direction in which the recording elements are arrayed, and a conveyance system such as a carriage according to which the short head moves in a scanning manner is not necessary. Further, since complicated scanning control for movement of the carriage and the recording medium is not necessary and only the recording medium is moved, higher recording speed can be attained compared with a shuttle system. While the inkjet recording method of the invention is applicable to any of these, the effect of improving the jetting accuracy and the rubbing resistance of the image is generally remarkable when the inkjet recording method is applied to the line system in which dummy jetting is not performed.

Further, in the ink-applying process in the invention, when the line system is used, not only by using one kind of ink composition, but also by using two or more kinds of ink compositions, the ink jetting (impinging) interval between previously jetted ink composition droplet (the n th color (n ≥1), for example, the second color) and the subsequently jetted ink composition droplet (the n +1 th color (for example, the third color) can be one second or less, thereby performing recording favorably. In the invention, when the ink jetting interval is one second or less using the line system, an image with excellent rubbing resistance and suppressed occurrence of blocking can be obtained at higher recording speed than previous recording speed, while preventing ink bleed or color mixing caused by interference among ink droplets. Further, an image with excellent color hue and image forming property (reproducibility of fine lines or minute portions in an image) can be obtained.

The amount of ink droplets jetted from an inkjet recoding head is preferably from 0.5 pL to 6 pL (picoliter), more preferably from 1 pL to 5 pL, and still more preferably from 2 pL to 4 pL from the viewpoint of obtaining a high-resolution image.

### [Heat-Fixing Process]

The inkjet recording method of the invention preferably includes a heat-fixing process subsequent to an ink-applying process, in which an ink image formed by applying an ink composition is heat-fixed by bringing the ink image into contact with a heated surface. The ink image is subjected to the heat-fixing process, whereby the image on a recording medium is fixed, and the rubbing resistance against abrasion and scratches of an image can be more enhanced. Further, when using the aqueous ink composition of the invention, it is possible to effectively prevent bleeding.

It is preferable that heating is performed at a temperature higher than the glass transition temperature (Tg) of at least one polymer contained in the composite particles in the image. When heating at a temperature higher than the glass transition temperature (Tg), a film is formed on the image and the image is reinforced. Preferable range of the heating temperature is a glass transition temperature (Tg) of +10°C or higher. Specifically, the temperature is preferably in a range of from 40°C to 150°C, more preferably in a range of from 50°C to 100°C, and still more preferably in the range of from 60°C to 90°C.

The pressure applied together with the heating is preferably in a range of from 0.1 MPa to 3.0 MPa, more preferably in a range of from 0.1 MPa to 1.0 MPa, and still more preferably in a range of from 0.1 MPa to 0.5 MPa in view of surface smoothing.

The method of heating is not particularly restricted, and examples of heating methods include non-contact drying methods such as a method of heating with a heating body such as Nichrome wire heater, a method of supplying warm air or hot air, and a method of heating with a halogen lamp or an infrared lamp. Further, a heating and pressure-application method is not particularly restricted, and examples of heating and pressure-application methods include a contact heat-fixing method such as a method of pressing a heated plate against an image forming surface of the recording medium, and a method using a heating and pressure-application device which includes a pair of heating and pressure-application rollers, a pair of heating and pressure-application belts, or a heating and pressure application belt arranged at an image-recording-surface side of the recording medium and a retention roller arranged at a side of the recording medium opposite to the heating and pressure application belt side so as to passing the recording medium between the pair of rollers, between the pair of heating and pressure-application belts, or between the heating and pressure-application belt and the retention roller.

When the heating and pressure-application are preformed, a time for nipping is preferably from 1 millisecond to 10 seconds, more preferably from 2 milliseconds to 1 second, and still more preferably from 4 millisecond to 100 milliseconds. A nipping width is preferably from 0.1 mm to 100 mm, more preferably from 0.5 mm to 50 mm, and still more preferably from 1 mm to 10 mm.

The heating and pressure-application roller may be a metal roller made of metal, or may be a roller having a coating layer made from an elastic body and optionally a surface layer (may also be referred to as a "releasing layer") formed on the peripheral surface of a core metal made of metal. The core metal may be, for example, a cylindrical body made of iron, aluminum or SUS stainless steel, and at least a part of a surface of the core metal is preferably covered with a coating layer. In particular, the coating layer is preferably formed of a silicone resin or a fluorine resin having releasing property. Further, it is preferable that a heating body is incorporated inside of the core metal of either of heating and pressure application rollers. In this case, when the recording medium is passed through between the rollers, the recording medium is subjected to heating at the same time of application of pressure. Alternatively, the recording medium may be heated by being nipped by two heating rollers, if necessary. For example, the heating body is preferably a halogen lamp a ceramic heater, Nichrome wire or the like.

A belt substrate which is used in a heating and pressure application belt used for the heating and pressure application device is preferably a seamless a nickel electroform, and the thickness of the substrate is preferably from 10 µm to 100 µm. As a material of the belt substrate, aluminum, iron, polyethylene or the like may be used besides nickel. When using a silicone resin or a fluorine resin for forming the coating layer, the thickness of the layer formed by these resins is preferably from 1 µm to 50 µm, and more preferably from 10 µm to 30 µm.

Further, in order to obtain the pressure (nip pressure), for example, an elastic member such as a spring or the like having tension may be selected and arranged at both ends of roller(s) such as heating and pressure application roller(s) so as to obtain a desired nip pressure in light of a nipping distance.

When a heating and pressure application roller or a heating and pressure application belt is used, the conveying speed of the recording medium is preferably from 200 smm/second to 700 mm/second, more preferably from 300 mm/second to 650 mm/second, and still preferably from 400 mm/second to 600 mm/second.

### [Treatment Liquid-Applying Process]

The image forming method of the invention includes preferably a treatment liquid-applying process in addition to the ink-applying process and heat-fixing process from the viewpoint of high-speed image formation.
In the treatment liquid-applying process, a treatment liquid capable of forming aggregates by being brought into contact with an ink composition is applied to a recording medium, and aggregates containing water-insoluble coloring particles are formed by bringing the treatment liquid into contact with the ink composition, thereby forming an image. In this case, dispersed particles such as composite particles or water-insoluble coloring particles in the ink composition are aggregated, thereby fixing an image on the recording medium. Details of each component in the treatment liquid and preferable embodiments are described above.

The application of the treatment liquid may be performed using a known method such as a coating method, an inkjet method, an immerse method, or the like. As the coating method, a known coating method may be performed using a bar coater, an extrusion die coater, an air doctor coater, a blade coater, a rod coater, a knife coater, a squeeze coater, a reverse roll coater, or the like. Details of the inkjet method are described above.

The treatment liquid-applying process may be performed either before or after the ink-applying process using the ink composition.
In the invention, an embodiment where the ink-applying process is performed after applying the treatment liquid in the treatment liquid-applying process is preferable. That is, an embodiment in which a treatment liquid for aggregating water-insoluble coloring particles in the ink composition is applied to a recording medium beforehand, prior to the application of an ink composition, and an image is formed by applying the ink composition so as to come into contact with the treatment liquid applied onto the recording medium, is preferred. In this way, the inkjet recording can be performed at faster speed, and an image with high density and high resolution can be obtained even if the image is recorded at high speed.

The application amount of the treatment liquid is not particularly restricted, as long as the treatment liquid is capable of aggregating the ink composition. However, the application amount of the aggregating component (for example, divalent or higher valent carboxylic acid or a cationic organic compound) is preferably 0.1 g/m² or more. In particular, the application amount of the aggregating component is preferably from 0.1 g/m² to 1.0 g/m², and more preferably from 0.2 g/m² to 0.8 g/m². When the application amount of the aggregating component is 0.1 g/m² or more, an aggregating reaction proceeds favorably, and when the application amount of the aggregating component is 1.0 g/m² or less, it is preferable that the glossiness be not too high.

Further, in the invention, it is preferable that the ink-applying process is performed after the treatment liquid-applying process, and a heat-drying process for heat-drying the treatment liquid on the recording medium is further performed in the period between after the application of the treatment liquid onto the recording medium and until the application of the ink composition onto the recording medium. When heat-drying the treatment liquid beforehand prior to the ink-applying process, ink coloring properties such as ink bleed-preventive property can be improved, whereby a visible image having good color density and color hue can be recorded.

The heat-drying can be performed using a known heating unit such as a heater, or the like, an air-blowing unit using an air-blow such as a dryer or the like, or a unit combining these. Examples of heating methods include a method of applying heat with a heater or the like from the opposite side of the recording medium to the surface on which the treatment liquid is applied, a method of applying warm air or hot air to the surface of the recording medium on which the treatment liquid is applied, and a method of heating using an infrared heater. These methods may be used in combination.

### [Process for Optical Fixation]

The image forming method of the present invention may include a process for optical fixation in addition to the ink-applying process and the heat-fixing process, from the viewpoint of high-speed image formation. Further, only the process for optical fixation may be provided in addition to the ink-applying process, without adding the heat-fixing process. Alternatively, both the process for optical fixation and the heat-fixing process may be provided.
In the process for optical fixation, the ink composition in which a part of water contained in the ink composition has been removed is irradiated with actinic energy rays, and as a result, the polymerizable compound in the ink composition are allowed to undergo polymerization, and thus a cured film including a pigment is formed, thereby performing fixation. Therefore, the rubbing resistance of the image to be formed may be further improved.
In the present invention, the actinic energy rays to be used are not particularly limited as far as the actinic energy rays can cause polymerization of the polymerizable compound. Examples thereof include ultraviolet rays and electron beams. Above all, ultraviolet rays are preferable from the viewpoint of versatility.

### - Ultraviolet Ray Irradiation Lamp -

As a means for irradiating with ultraviolet rays, a means which is usually used may be used, and particularly, an ultraviolet ray irradiation lamp is preferably used.
The ultraviolet ray irradiation lamp is preferably such a mercury lamp that has a mercury vapor pressure of from 1 Pa to 10 Pa while the lamp is lit, namely, a low pressure mercury lamp, a high pressure mercury lamp, a mercury lamp coated with a fluorescent substance, a UV-LED (ultraviolet-light emitting diode) light source, or the like. The emission spectrum in the ultraviolet ray region of these mercury lamps and UV-LED is 450 nm or less, and is particularly in a range of from 184 nm to 450 nm, which is suitable for efficiently allowing the polymerizable compound contained in the black or colored ink composition to react. Further, in view of providing a power source in a printer, since a small size power source can be used, the above mercury lamps and UV-LED are suitable. Concerning the mercury lamp, for example, a metal halide lamp, a high pressure mercury lamp, a super high pressure mercury lamp, a xenon flash lamp, a deep UV lamp, a lamp in which a mercury lamp is excited using a microwave from the outside without using an electrode, a UV laser, and the like are practically used. Since the region of emission spectrum of these lamps includes the above range, these lamps can be fundamentally applied as far as the size of the power source, the input intensity, the shape of lamp, and the like are acceptable. A light source is selected in accordance with the sensitivity of the polymerization initiator used.

It is preferable that the needed ultraviolet ray intensity is from 500 mW/cm² to 5,000 mW/cm² in the wavelength region effective for curing. When the irradiation intensity is weak, formation of an image having high quality and durability may not be attained. When the irradiation intensity is too strong, there are cases in which the recording medium is damaged, or color fading of the colorant occurs.

### - Recording Medium -

In the inkjet recording method of the invention, an image is recorded on a recording medium.
The recording medium is not particularly restricted, and general printing paper, which is mainly made of cellulose such as so-called high-quality paper, coat paper, art paper or the like used in the general offset printing, may be used. When performing an image recording by a general inkjet printing method using an aqueous ink, the ink is relatively slowly absorbed and dried in the general printing paper made of mainly cellulose, and therefore, the colorant is easily moved after ink droplets are jetted, thereby reducing the image quality. However, in the inkjet recording method according to the invention, the movement of the colorant can be suppressed, thereby enabling high quality image recording with excellent color density and color hue.

Recording media that are generally commercially available can be used as the recording medium, and examples include high-quality paper (A) such as Prince WOOD FREE (trade name, produced by Oji Paper Co., Ltd.), SHIORAI (trade name, produced by Nippon Paper Industries Co., Ltd.) and New NPI High Quality (trade name, produced by Nippon Paper Industries Co., Ltd.), very light-weight coated paper such as EVER LIGHT COATED (trade name, produced by Oji Paper Co., Ltd.) and AURORA S (trade name, produced by Nippon Paper Industries Co., Ltd.), light-weight coated paper (A3) such as TOPKOTE (L) (trade name, produced by Oji Paper Co., Ltd.) and AUROA L (trade name, produced by Nippon Paper Industries Co., Ltd.), coated paper (A2, B2) such as TOPKOTE PLUS (trade name, produced by Oji Paper Co., Ltd.) and AURORA COAT (trade name, produced by Nippon Paper Industries Co., Ltd.) and art paper (A1) such as 2/SIDE GOLDEN CASK GLOSS (trade name, produced by Oji Paper Co., Ltd.) and TOKUBISHI ART (trade name, produced by Mitsubishi Paper Mills Limited). Further, different kinds of photographic paper for inkjet recording can be used.

Among these, in view of obtaining a high-quality image with more effective suppression of movement of colorant and obtaining more favorable color density and hue than those of conventional method, a recording medium having a water absorption coefficient Ka of from 0.05 to 0.5 mL/m²·ms^{1/2} is preferable, a recording medium having a water absorption coefficient Ka of from 0.1 to 0.4 mL/m²·ms^{1/2} is more preferable, and a recording medium having a water absorption coefficient Ka of from 0.2 to 0.3 mL/m²·ms^{1/2} is yet more preferable.

The water absorption coefficient Ka refers to that described in the JAPAN TAPPI Paper and Pulp Testing Method No. 51: 2000 (published by JAPAN TAPPI), the disclosure of which is incorporated by reference herein, and, specifically, the absorption coefficient Ka is calculated from the difference between the transfer amount of water at a contact time of 100 ms and that at a contact time of 900 ms measured by an Automatic Scanning Liquid Absorptometer KM500win (manufactured by Kumagai Riki Kogyo Co., Ltd.).

Among the recording media, so-called coated paper generally used in the offset printing is preferable. The coated paper includes a coat layer which is formed by applying a coating material on a surface of high-quality paper, neutral paper or the like which are mainly made of cellulose and are not generally surface-treated. In the image formation by a general aqueous inkjet method, the coated paper tends to cause problems in quality such as the glossiness or rubbing resistance of an image. However, in the inkjet recording method according to the invention, an image having excellent glossiness with suppressed uneven glossiness, and excellent rubbing resistance can be obtained. In particular, it is preferable that coated paper having base paper and a coat layer containing kaolin and/or calcium bicarbonate is used. More specifically, art paper, coated paper, lightweight coated paper or very lightweight coated paper is desirable.

### EXAMPLES

Hereinafter, the present invention is specifically explained with reference to Examples, but the scope of the present invention is not limited to these Examples. Unless stated otherwise, the "parts" and "%" are based on mass.

### <Examples>

### [Preparation of Aqueous Dispersion of Polymer (a)]

### - Process of Preparing Solution of Polymer (a) -

### (Synthesis of Polymer (a-4))

560.0 g of methyl ethyl ketone was placed in a 2 liter three-necked flask equipped with an agitator, a thermometer, a reflux condenser tube, and a nitrogen gas inlet tube, and the temperature was elevated to 87°C under a nitrogen atmosphere. While maintaining a condition of reflux in the reaction vessel (until finishing the reaction), a mixed solution formed from 272.6 g of methyl methacrylate, 80.5 g of 2-methoxyethyl acrylate, 216.8 g of benzyl methacrylate, 49.6 g of acrylic acid, 108 g of methyl ethyl ketone, and 2.32 g of "V-601" (trade name, manufactured by Wako Pure Chemical Industries, Ltd.) was added dropwise at a constant rate so that the addition would be completed in 2 hours. After the completion of the addition, the resulting mixture was stirred for one hour, and then (1) a solution formed from 1.16 g of "V-601" and 6.4 g of methyl ethyl ketone was added, and the mixture was stirred for 2 hours (referred as a reaction step (1)). The reaction step (1) was repeated four times and then a solution formed from 1.16 g of "V-601" and 6.4 g of methyl ethyl ketone was further added, and the mixture was stirred for 3 hours. In this way, a solution of polymer (a-4) was obtained.
The weight average molecular weight (Mw) of the obtained polymer (a-4) was 56,000 (measured by gel permeation chromatography (GPC) using columns TSKGEL SUPER HZM-H, TSKGEL SUPER HZ4000, and TSKGEL SUPER HZ200 (all trade names, manufactured by Tosoh Corporation), and was calculated in terms of polystyrene.

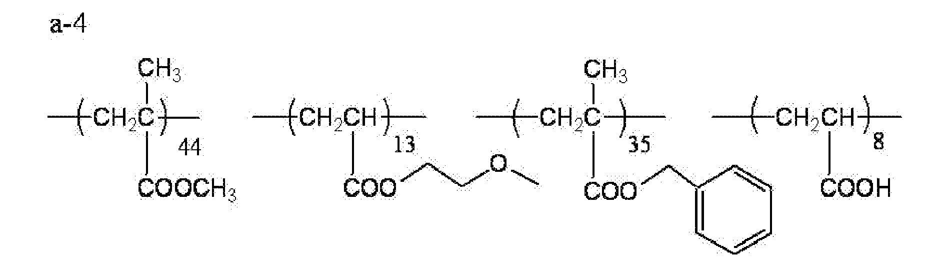

### (Synthesis of Polymer (a-1))

Preparation of a solution of polymer (a-1) was conducted in a manner substantially similar to that in the preparation of the solution of polymer (a-4), except that the monomers in the synthesis of the polymer (a-4) were changed to 272.6 g of methyl methacrylate, 123.9 g of 2-methoxyethyl acrylate, 216.8 g of benzyl methacrylate, and 6.2 g of acrylic acid.

### (Synthesis of Polymer (a-2))

Preparation of a solution of polymer (a-2) was conducted in a manner substantially similar to that in the preparation of the solution of polymer (a-4), except that the monomers in the synthesis of the polymer (a-4) were changed to 117.7 g of methyl methacrylate, 80.5 g of 2-methoxyethyl acrylate, 216.8 g of benzyl methacrylate, and 154.9 g of acrylic acid.

### (Synthesis of Polymer (a-3))

Preparation of a solution of polymer (a-3) was conducted in a manner substantially similar to that in the preparation of the solution of polymer (a-4), except that the monomers in the synthesis of the polymer (a-4) were changed to 92.9 g of methyl methacrylate, 80.5 g of 2-methoxyethyl acrylate, 216.8 g of benzyl methacrylate, and 167.3 g of acrylic acid.

### (Synthesis of Polymer (a-5))

Preparation of a solution of polymer (a-5) was conducted in a manner substantially similar to that in the preparation of the solution of polymer (a-4), except that the monomers in the synthesis of the polymer (a-4) were changed to 340.7 g of methyl methacrylate, 235.4 g of isobornyl methacrylate, and 49.6 g of methacrylic acid.

- Process of Preparing Aqueous Dispersion of Polymer (a) -
Next, 291.5 g of the obtained polymer (a-4) solution (solid matter concentration of 44.6%) was weighed, and 82.5 g of isopropanol, 3.25 g of a 20% aqueous solution of maleic acid (water-soluble electrolyte; corresponding to 0.5% with respect to the amount of the polymer (a)), and 73.92 g of a 1 mol/L aqueous NaOH (sodium hydroxide) solution were added thereto. The temperature inside the reaction vessel was elevated to 87°C. Subsequently, 352 g of distilled water was added thereto dropwise at a rate of 10 mL/min to achieve water dispersion (dispersion step).
Then, under the atmospheric pressure, the temperature inside the reaction vessel was kept at 87°C for one hour, at 91°C for one hour, and at 95°C for 30 minutes. Thereafter, the pressure inside the reaction vessel was reduced, and 287.0 g in total of the solvent including isopropanol, methyl ethyl ketone and distilled water was distilled off (solvent removing step). In this way, an aqueous dispersion of polymer (a-4) having a solid matter concentration of 26.5% was obtained.
It should be noted that, the number at each structural unit in the above compound example (a-4) represents the mass ratio.

Furthermore, preparation of an aqueous dispersion of polymer (a-1), an aqueous dispersion of polymer (a-2), an aqueous dispersion of polymer (a-3), and an aqueous dispersion of polymer (a-5) was conducted in a manner substantially similar to that in the preparation of the aqueous dispersion of polymer (a-4), except that the solution of polymer (a-4) was changed to the solution of polymer (a-1), (a-2), (a-3), or (a-5), respectively, and in relation to this, the addition amount of the base for neutralization was changed so as to obtain substantially the same neutralization degree.

### [Manufacture of Composite Particles (A) by Seed Polymerization]

### (Manufacture of Composite Particles A-6)

240 g of the aqueous dispersion of polymer (a-4) obtained in the dispersion preparing process, 160 g of distilled water, and 11.9 g of divinylbenzene (DVB) were placed in a 1 liter three-necked flask equipped with an agitator and a reflux condenser tube, followed by heating and stirring at 70°C under nitrogen gas flow. Then, an aqueous solution obtained by dissolving 0.6 g of 2,2'-azobis(2-amidinopropane) dihydrochloride in 5 g of distilled water was added thereto, followed by stirring for two hours. Thereafter, an aqueous solution obtained by dissolving 0.6 g of 2,2'-azobis(2-amidinopropane) dihydrochloride in 5 g of distilled water was further added thereto, then the temperature of the mixture was elevated to 85°C and the mixture was stirred for additional two hours. In this way, composite particles A-6 were obtained.
The volume average particle diameter of the obtained composite particles A-6 was 23 nm (the particle diameter was measured using MICROTRAC UPA EX-150 (trade name, manufactured by Nikkiso Co., Ltd.).

### (Manufacture of Composite Particles A-1 to A-5, and A-7 to A-19)

Manufacture of composite particles A-1 to A-5, and A-7 to A-19 was conducted in a manner substantially similar to that in the manufacture of the composite particles A-6, except that the aqueous dispersion of polymer (a-4) was changed to the aqueous dispersion of the polymer described in Table 1, and divinylbenzene (DVB) was changed to the monomer described in Table 1, in the manufacture of the composite particles A-6.

### [Preparation of Aqueous Ink Composition]

### <<Preparation of Cyan Ink E-6>>

### (Preparation of Cyan Dispersion Liquid as Water-Insoluble Coloring Particles)

In a reaction vessel, 6 parts of styrene, 11 parts of stearyl methacrylate, 4 parts of STYRENE MACROMER AS-6 (trade name, manufactured by TOAGOSEI Co., Ltd.), 5 parts of BLEMMER PP-500 (trade name, manufactured by NOF Corporation), 5 parts of methacrylic acid, 0.05 parts of 2-mercaptoethanol, and 24 parts of methyl ethyl ketone were placed and mixed to prepare a mixed solution.
Another mixed solution including 14 parts of styrene, 24 parts of stearyl methacrylate, 9 parts of STYRENE MACROMER AS-6 (trade name, manufactured by TOAGOSEI Co., Ltd.), 9 parts of BLEMMER PP-500 (trade name, manufactured by NOF Corporation), 10 parts of methacrylic acid, 0.13 parts of 2-mercaptoethanol, 56 parts of methyl ethyl ketone, and 1.2 parts of 2,2'-azobis(2,4-dimethylvaleronitrile) was prepared and placed in a dropping funnel.

Next, under the nitrogen atmosphere, the mixed solution in the reaction vessel was heated to 75°C while stirring, and then the another mixed solution in the dropping funnel was slowly added thereto dropwise over one hour. Two hours later from the completion of the addition, a solution obtained by dissolving 1.2 parts of 2,2'-azobis(2,4-dimethylvaleronitrile) in 12 parts of methyl ethyl ketone was added thereto dropwise over 3 hours. Then, the resulting liquid was further left to be matured at 75°C for two hours, and at 80°C for 2 hours. Thereby, a polymer dispersant solution was obtained.

Apart of the polymer dispersant solution thus obtained was subjected to isolation by removing the solvent, and the resulting solid matter was diluted using tetrahydrofuran to give a liquid having a concentration of 0.1%, which was used to measure the weight average molecular weight by GPC. As a result, the weight average molecular weight of the isolated solid matter was 25,000 in terms of polystyrene.

Further, the obtained polymer dispersant solution in an amount of 5.0 g in terms of solid matter, 10.0 g of a cyan pigment, Pigment Blue 15:3 (manufactured by Dainichiseika Color & Chemicals Mfg. Co., Ltd.), 40.0 g of methyl ethyl ketone, 8.0 g of a 1 mol/L aqueous sodium hydroxide solution, 82.0 g of deionized water, and 300 g of zirconia beads having a diameter of 0.1 mm were supplied in a vessel, and dispersed for 6 hours at 1,000 rpm using READY MILL DISPERSER (trade name, manufactured by AIMEX Co., Ltd.). The obtained dispersion liquid was subjected to vacuum concentration using an evaporator to sufficiently distill off the methyl ethyl ketone, until the pigment concentration was 10%. In this way, a cyan dispersion liquid as water-insoluble coloring particles was prepared. The volume average particle diameter of the water-insoluble coloring particles (cyan dispersion liquid) thus obtained was 77 nm.

### (Preparation of Cyan Ink E-6)

The respective components were mixed to obtain the following ink composition, using the cyan dispersion liquid as the water-insoluble coloring particles and the aqueous dispersion of the composite particles A-6. Thereafter, the mixture was subjected to filtration using a filter having a pore size of 5 µm to remove coarse particles. In this way, cyan ink E-6 as an aqueous ink composition was obtained.

### <Ink Composition of Cyan Ink E-6>

| | |
|---|---|
| · Cyan dispersion liquid described above | : 33% |
| · Composite particles A-6 (in terms of solid matter) | : 8% |
| · Diethylene glycol monoethyl ether | : 10% |
| (manufactured by Wako Pure Chemical Industries, Ltd.; water-soluble organic solvent) | |
| · SANNIX GP250 | : 5% |
| (trade name, manufactured by Sanyo Chemical Industries, Ltd.; water-soluble organic solvent) | |
| · OLFINE E1010 | : 1% |
| (trade name, manufactured by Nissin Chemical Industry Co., Ltd.) | |
| · Deionized water | : added to give 100% in total |

### <<Preparation of Cyan Inks E-1 to E-5, and E-7 to E-19>>

Preparation of cyan inks E-1 to E-5, and E-7 to E-19 was conducted in a manner substantially similar to that in the preparation of the cyan ink E-6, except that the aqueous dispersion of the composite particles A-1 to A-5, or A-7 to A-19 was used, respectively, instead of using the aqueous dispersion of the composite particles A-6 in the preparation of the cyan ink E-6.

### <<Preparation of Cyan Ink F-6>>

The respective components were mixed to obtain the following ink composition, using the cyan dispersion liquid as the water-insoluble coloring particles, the aqueous dispersion of the composite particles A-6, the polymerizable compound, and the polymerization initiator. Thereafter, the mixture was subjected to filtration using a filter having a pore size of 5 µm to remove coarse particles. In this way, cyan ink F-6 as an aqueous ink composition was obtained.

### - Composition of Cyan Ink F-6 -

| | |
|---|---|
| •Cyan dispersion liquid described above | : 33% |
| • Composite particles A-6 (in terms of solid matter) | : 8% |
| • Polymerizable compound: exemplary compound 2-1 | : 18% |
| • Polymerizable compound: exemplary compound 2-4 | : 2% |
| • Polymerization initiator: IRGACURE 2959 (trade name) | : 3% |
| • OLFINE E1010 (trade name) | : 1% |
| • Deionized water | : 35% |

### <Comparative Examples>

Preparation of comparative inks G-1 and G-2 was conducted in a manner substantially similar to that in the preparation of the cyan ink E-6, except that the copolymer latex described in Example 1 in paragraph [0055] of Japanese Patent No. 3522807 was used as D-1, or the latex described in Example I in paragraph [0037] of JP-A No. 2006-257418 was used as D-2, instead of using the composite particles A-6 in the preparation of the cyan ink E-6.
Preparation of comparative inks H-1 and H-2 was conducted in a manner substantially similar to that in the preparation of the cyan ink F-6, except that the copolymer latex described in Example 1 in paragraph [0055] of Japanese Patent No. 3522807 was used as D-1, or the latex described in Example I in paragraph [0037] of JP-A No. 2006-257418 was used as D-2, instead of using the composite particles A-6 in the preparation of the cyan ink F-6.

### [Preparation of Treatment Liquid]

A treatment liquid was prepared by mixing the respective components to give the following composition. The physical properties of the treatment liquid were measured, and as a result, the viscosity was 2.6 mPa·s, the surface tension was 37.3 mN/m, and the pH was 1.6 (at 25°C).

### - Composition of Treatment Liquid -

| | |
|---|---|
| • Malonic acid | : 15.0% |
| (manufactured by Wako Pure Chemical Industries, Ltd.; divalent carboxylic acid) | |
| • Diethylene glycol monomethyl ether | : 20.0% |
| (manufactured by Wako Pure Chemical Industries, Ltd.) | |
| • Sodium salt of N-oleoyl-N-methyltaurine | : 1.0% |
| (surfactant) | |
| • Deionized water | : 64.0% |

### [Evaluation]

With regard to each of the cyan inks (E-1 to E-19, F-1 to F-19, G-1, G-2, H-1, and H-2) prepared as described above, jetting stability, maintenance property, and aggregation property of the ink were evaluated.

(Jetting Stability Test)
The jetting stability test was carried out as follows. On a sheet of TOKUBISHI ART DOUBLE-SIDED N" (trade name, manufactured by Mitsubishi Paper Mills, Ltd.), using a printer head GELJET G717 (trade name, manufactured by Ricoh Co., Ltd.), ink droplets were ejected to give a resolution of 1,200 dpi × 600 dpi and at an ink droplet amount of 12 pL. Ink droplets were successively ejected, and 5 hours later, the states were observed to evaluate the jetting stability. The results of the jetting stability test are shown in Table 1. The evaluation criteria of the jetting stability test shown in Table 1 are as follows. Note that, the grade C in the evaluation is deemed to be a level not allowable for practical use.

### - Evaluation Criteria -

A: Jetting failure is not observed, and direction failure is also not observed.
B: Jetting failure is not observed, but direction failure are detected a little.
C: There are a lot of jetting failure.

### (Maintenance Property)

The maintenance property test was carried out as follows. Ink droplets were spotted on a glass plate at an amount of 2 µL. After drying the ink at 23°C for 12 hours, a cotton cloth was placed on the portion of the glass plate at which the ink droplets had been spotted, and further a weight of 200 g was mounted thereon. One minute later, the cotton cloth was removed together with the weight, and the ink remained on the glass plate was visually observed, and evaluated.

### - Evaluation Criteria -

A: The ink does not remain at all.
B: The ink has moved on the glass plate and the ink remains.
C: The ink remains at the place where the ink droplets have been spotted on the glass plate.

### <Image Formation and Evaluation of Aggregation Property>

### (Image Formation)

A printer head GELJET GX5000 (trade name, manufactured by Ricoh Co., Ltd.) was prepared, and the storage tank connected to the printer head was refilled with the cyan ink obtained as described above. A sheet of "TOKUBISHI ART DOUBLE-SIDED N" (trade name, manufactured by Mitsubishi Paper Mills, Ltd.) that served as a recording medium was fixed on the stage that was movable in a predetermined linear direction at a velocity of 500 mm/sec. The temperature of the stage was kept at 30°C. The treatment liquid obtained as described above was coated on the recording medium using a bar coater to give a thickness of about 1.2 µm, and dried at 50°C for 2 seconds immediately after coating.
After that, a character pattern with 16 points was printed as follows. The printer head GELJET GX5000 was fixed and arranged such that the direction of the line head where nozzles were arranged (main scanning direction) was inclined at an angle of 75.7 degree with respect to the perpendicular direction to the moving direction of the stage (sub scanning direction). While moving the recording medium at a constant speed along the sub scanning direction, the cyan ink was ejected by a line system under the ejection conditions of an ink droplet amount of 2.4 pL, an ejection frequency of 24 kHz, and a resolution of 1,200 dpi × 1,200 dpi.
Immediately after printing, with regard to the inks E-1 to E-19, G-1, and G-2, the printed recording medium was dried at 60°C for 3 seconds, and further passed between a pair of fixing rollers heated at 60°C so that heat-fixing processing was carried out at a nip pressure of 0.25 MPa and a nip width of 4 mm, to obtain the samples for evaluation. With regard to the inks F-1 to F-19, H-1, and H-2, the printed recording medium was irradiated by being conveyed under light from an iron-doped ultraviolet lamp (power: 120W/cm²) over one second, to obtain the samples for evaluation.

### (Evaluation of Aggregation Property)

24 hours later, bleeding in the printed pattern was visually observed, and evaluation of aggregation property was performed. The obtained evaluation results are shown in Table 1.

### - Evaluation criteria -

A: Bleeding in the characters is not detected at all.
B: Bleeding is seen with regard to some characters.
C: Bleeding is seen with regard to all of the characters.

**TABLE 1**

| Ink No. | Composite Particles (A) | Polymer (a) | Acid Value (mgKOH/g) | Crosslinking Monomer (b) | Non-Crosslinking Monomer | Crosslinking Monomer / Composite Particles (wt%/wt%) | Particle Diameter (nm) | Jetting Stability | Maintenance Property | Aggregation Property | Note |
|---|---|---|---|---|---|---|---|---|---|---|---|
| E-1 | A-1 | a-1 | 8 | DVB | - | 10 | 55 | B | A | A | Invention |
| E-2 | A-2 | a-2 | 195 | DVB | - | 10 | 20 | A | A | A | Invention |
| E-3 | A-3 | a-3 | 210 | DVB | - | 10 | 15 | A | A | B | Invention |
| E-4 | A-4 | a-4 | 62 | DVB | - | 85 | 80 | B | B | A | Invention |
| E-5 | A-5 | a-4 | 62 | DVB | - | 5 | 20 | A | A | A | Invention |
| E-6 | A-6 | a-4 | 62 | DVB | - | 10 | 23 | A | A | A | Invention |
| E-7 | A-7 | a-4 | 62 | DVB | - | 20 | 30 | A | A | A | Invention |
| E-8 | A-8 | a-4 | 62 | DVB | - | 50 | 56 | A | B | A | Invention |
| E-9 | A-9 | a-5 | 52 | DVB | - | 10 | 2 | B | A | A | Invention |
| E-10 | A-10 | a-4 | 62 | DVB | iBOMA | 10 | 35 | A | B | A | Invention |
| E-11 | A-11 | a-4 | 62 | DVB | MMA | 10 | 30 | A | B | A | Invention |
| E-12 | A-12 | a-4 | 62 | DVB | EMA | 10 | 29 | A | B | A | Invention |
| E-13 | A-13 | a-4 | 62 | DVB | HEMA | 10 | 37 | A | B | A | Invention |
| E-14 | A-14 | a-4 | 62 | DVB | St | 10 | 25 | A | B | A | Invention |
| E-15 | A-15 | a-4 | 62 | DVB | iBOMA, MMA | 10 | 42 | A | B | A | Invention |
| E-16 | A-16 | a-4 | 62 | EGDMA | - | 5 | 25 | A | A | A | Invention |
| E-17 | A-17 | a-4 | 62 | EGDMA | - | 10 | 26 | A | A | A | Invention |
| E-18 | A-18 | a-4 | 62 | EGDMA | - | 20 | 28 | A | A | A | Invention |
| E-19 | A-19 | a-4 | 62 | DEGDMA | - | 10 | 24 | A | A | A | Invention |
| F-1 | A-1 | a-1 | 8 | DVB | - | 10 | 55 | B | A | A | Invention |
| F-2 | A-2 | a-2 | 195 | DVB | - | 10 | 20 | A | A | A | Invention |
| F-3 | A-3 | a-3 | 210 | DVB | - | 10 | 15 | A | A | B | Invention |
| F-4 | A-4 | a-4 | 62 | DVB | - | 85 | 80 | B | B | A | Invention |

**TABLE 1 -continued-**

| Ink No. | Composite Particles (A) | Polymer (a) | Acid Value (mgKOH/g) | Crosslinking Monomer (b) | Non-Crosslinking Monomer | Crosslinking Monomer / Composite Particles (wt%/wt%) | Particle Diameter (nm) | Jetting Stability | Maintenance Property | Aggregation Property | Note |
|---|---|---|---|---|---|---|---|---|---|---|---|
| F-5 | A-5 | a-4 | 62 | DVB | - | 5 | 20 | A | A | A | Invention |
| F-6 | A-6 | a-4 | 62 | DVB | - | 10 | 23 | A | A | A | Invention |
| F-7 | A-7 | a-4 | 62 | DVB | - | 20 | 30 | A | A | A | Invention |
| F-8 | A-8 | a-4 | 62 | DVB | - | 50 | 56 | A | B | A | Invention |
| F-9 | A-9 | a-5 | 52 | DVB | - | 10 | 2 | B | A | A | Invention |
| F-10 | A-10 | a-4 | 62 | DVB | iBOMA | 10 | 35 | A | B | A | Invention |
| F-11 | A-11 | a-4 | 62 | DVB | MMA | 10 | 30 | A | B | A | Invention |
| F-12 | A-12 | a-4 | 62 | DVB | EMA | 10 | 29 | A | B | A | Invention |
| F-13 | A-13 | a-4 | 62 | DVB | HEMA | 10 | 37 | A | B | A | Invention |
| F-14 | A-14 | a-4 | 62 | DVB | St | 10 | 25 | A | B | A | Invention |
| F-15 | A-15 | a-4 | 62 | DVB | iBOMA, MMA | 10 | 42 | A | B | A | Invention |
| F-16 | A-16 | a-4 | 62 | EGDMA | - | 5 | 25 | A | A | A | Invention |
| F-17 | A-17 | a-4 | 62 | EGDMA | - | 10 | 26 | A | A | A | Invention |
| F-18 | A-18 | a-4 | 62 | EGDMA | - | 20 | 28 | A | A | A | Invention |
| F-19 | A-19 | a-4 | 62 | DEGDMA | - | 10 | 24 | A | A | A | Invention |
| G-1 | D-1 | - | 28 | Butadiene | - | 40 | 115 | c | B | c | Comparative |
| G-2 | D-2 | - | 24 | EGDMA | - | 1.2 | 260 | c | c | c | Comparative |
| H-1 | D-1 | - | 28 | Butadiene | - | 40 | 115 | c | B | c | Comparative |
| H-2 | D-2 | - | 24 | EGDMA | - | 1.2 | 260 | c | c | c | Comparative |

Details of the monomers used in the Examples are as shown below.

### (Crosslinking monomer)

- DVB: divinylbenzene
- EGDMA: ethylene glycol dimethacrylate
- DEGDMA: di(ethylene glycol) dimethacrylate

### (Non-crosslinking monomer)

- iBOMA: isobornyl methacrylate
- MMA: methyl methacrylate
- EMA: ethyl methacrylate
- HEMA: 2-hydroxyethyl methacrylate
- St: styrene

As is evident from Table 1, the ink compositions having the configuration according to the present invention gave good results in all of the evaluations.

According to the present invention, composite particles which have a higher hardness as compared with conventional composite particles, and also have a characteristic in that, when used in an ink composition, the ink composition exhibits excellent ink jetting property, since the composite particles do not substantially contain a surfactant, as well as excellent ink aggregation property when the ink composition is in contact with a treatment liquid containing an aggregating component that aggregates components in the ink composition, and excellent maintenance property; and a method of manufacturing the composite particles may be provided.
Further, according to the present invention, an aqueous ink composition which exhibits excellent ink aggregation property, when the aqueous ink composition is in contact with a treatment liquid containing an aggregating component that aggregates components in the ink composition, excellent ink jetting stability, and excellent maintenance property may be provided.
Moreover, according to the present invention, an image forming method which enables to stably form a high image quality image over the long-term may be provided.

Exemplary embodiments of the invention include, but are not limited to, the following.
<1> A method of manufacturing composite particles, comprising:
   preparing an aqueous dispersion of a polymer (a) by a phase inversion emulsification method, using water and a solution of the polymer (a), the polymer (a) containing at least one anionic structural unit and at least one hydrophobic structural unit; and
   forming composite particles through seed polymerization using at least one crosslinking monomer (b) in the presence of the aqueous dispersion of the polymer (a).
<2> The method according to <1>, wherein the at least one crosslinking monomer (b) includes a vinyl monomer.
<3> The method according to <1> or <2>, wherein the at least one crosslinking monomer (b) is selected from the group consisting of aromatic monomers, acryl monomers and methacryl monomers.
<4> The method according to <1> or <2>, wherein the at least one crosslinking monomer (b) is selected from the group consisting of styrene monomers, acryl monomers and methacryl monomers.
<5> The method according to any one of <1> to <4>, wherein a content ratio of the at least one crosslinking monomer (b) is from 3% by mass to 80% by mass with respect to the composite particles.
<6> The method according to any one of <1> to <5>, wherein an acid value of the polymer (a) is from 10 mgKOH/g to 200 mgKOH/g.
<7> The method according to any one of <1> to <6>, wherein the at least one anionic structural unit in the polymer (a) includes a structural unit containing a carboxyl group.
<8> The method according to any one of <1> to <7>, wherein the at least one anionic structural unit in the polymer (a) includes a structural unit derived from acrylic acid or methacrylic acid.
<9> The method according to any one of <1> to <8>, wherein the at least one hydrophobic structural unit in the polymer (a) includes a structural unit derived from an acrylic acid ester or a methacrylic acid ester.
<10> The method according to any one <1> to <9>, wherein a volume average particle diameter of the composite particles is from 1 nm to 400 nm.
<11> The method according to any one <1> to <9>, wherein a volume average particle diameter of the composite particles is from 0.1 nm to 80 nm.
<12> Composite particles obtained by the method according to any one of <1> to <11>.
<13> An aqueous ink composition comprising the composite particles according to <12> and a colorant.
<14> An image forming method comprising applying the aqueous ink composition according to < 13 > onto a recording medium.

All publications, patent applications, and technical standards mentioned in this specification are herein incorporated by reference to the same extent as if each individual publication, patent application, or technical standard was specifically and individually indicated to be incorporated by reference.

## Claims

1. A method of manufacturing composite particles, comprising:
preparing an aqueous dispersion of a polymer (a) by a phase inversion emulsification method, using water and a solution of the polymer (a), the polymer (a) containing at least one anionic structural unit and at least one hydrophobic structural unit; and
forming composite particles through seed polymerization using at least one crosslinking monomer (b) in the presence of the aqueous dispersion of the polymer (a).

2. The method according to claim 1, wherein the at least one crosslinking monomer (b) includes a vinyl monomer.

3. The method according to claim 1 or 2, wherein the at least one crosslinking monomer (b) is selected from the group consisting of aromatic monomers, acryl monomers and methacryl monomers.

4. The method according to any one of claims 1 to 3, wherein a content ratio of the at least one crosslinking monomer (b) is from 3% by mass to 80% by mass with respect to the composite particles.

5. The method according to any one of claims 1 to 4, wherein an acid value of the polymer (a) is from 10 mgKOH/g to 200 mgKOH/g.

6. The method according to any one of claims 1 to 5, wherein the at least one anionic structural unit in the polymer (a) includes a structural unit containing a carboxyl group.

7. The method according to any one of claims 1 to 6, wherein the at least one anionic structural unit in the polymer (a) includes a structural unit derived from acrylic acid or methacrylic acid.

8. The method according to any one of claims 1 to 7, wherein the at least one hydrophobic structural unit in the polymer (a) includes a structural unit derived from an acrylic acid ester or a methacrylic acid ester.

9. The method according to any one of claims 1 to 8, wherein a volume average particle diameter of the composite particles is from 1 nm to 400 nm.

10. Composite particles obtained by the method according to any one of claims 1 to 9.

11. An aqueous ink composition comprising the composite particles according to claim 10 and a colorant.

12. An image forming method comprising applying the aqueous ink composition according to claim 11 onto a recording medium.
